# EUROPEAN PATENT SPECIFICATION

(11) **EP 4 201 681 B1**
(45) Date of publication and mention of the grant of the patent: **10.12.2025**
(21) Application number: 20961586.3
(22) Date of filing: 12.11.2020
(51) Int. Cl.: B41J 2/17, B41J 2/175, B41J 2/19, C09D 11/101, B41J 2/18, B41J 29/38, C09D 11/322, C09D 11/38

(54) **INKJET RECORDING METHOD AND INKJET RECORDING DEVICE**
TINTENSTRAHLAUFZEICHNUNGSVERFAHREN UND TINTENSTRAHLAUFZEICHNUNGSVORRICHTUNG
PROCÉDÉ D'IMPRESSION À JET D'ENCRE ET DISPOSITIF D'IMPRESSION À JET D'ENCRE

(43) Date of publication of application: 28.06.2023
(73) Proprietor: KONICA MINOLTA, INC., Tokyo 100-7015 (JP)
(72) Inventor: TAKAKU, Yusuke, Tokyo 100-7015 (JP); KURAMOCHI, Shouhei, Tokyo 100-7015 (JP)
(74) Representative: Gille Hrabal Partnerschaftsgesellschaft mbB Patentanwälte
(86) International application number: PCT/JP2020/042285
(87) International publication number: WO 2022/102058

(56) References cited:
- WO-A1-2019/172322
- JP-A- 2009 285 837
- JP-A- 2014 180 829
- JP-A- 2018 144 302
- JP-A- 2019 166 660
- JP-A- 2020 179 534
- US-A1- 2011 050 766
- US-A1- 2019 291 457

## Description

### Technical Field

The present invention relates to an inkjet recording method and an inkjet recording device, particularly relates to an inkjet recording method and inkjet recording device with excellent coating film durability, solder heat resistance, and ejection stability.

### Background Art

Radical curable UV inks are generally used for solder masks. Radical curable UV inks may unintentionally polymerize due to radical species generated in the ink system (hereinafter referred to as "thermal polymerization"). Such radical species are trapped by polymerization inhibitors and oxygen in the ink system, but if the amount of radical species generated continues to increase, there is a risk that they will react with monomers and polymerize without being trapped by them.

On the other hand, unlike the preceding marking in inkjet printing on printed circuit boards, solder masks, like graphic printing, require high application volume and high duty cycle printing as well as high productivity.

For such inkjet recording devices, it is known to be effective to suppress cavitation by degassing ink in order to improve the discharge reliability of the inkjet head (see, for example, Patent Document 1).

In addition, a thermosetting component is usually included in the ink for the purpose of improving the coating film durability as a solder mask. If the amount of such functional component added for the purpose of increasing coating film durability is increased, the ink viscosity will increase. Therefore, the ink needs to be heated at a higher temperature than general UV inks in order to adjust it to the optimum viscosity range for dispensing. In addition, as mentioned above, ink degassing is necessary to improve dispensing reliability. These heating and degassing requirements require that the risk of thermal polymerization be minimized when handling solder mask inks. Although systems that supply ink while degassing under high temperature conditions of 60 to 90 °C have been invented in the past, there has been no knowledge of systems in which the ink itself contains a thermosetting component (see, for example, Patent Document 2 and Patent Document 3).

Documents US2011/050766 and US2019/291457 also disclose and inkjet recording method and an inkjet recording device comprising heating and degassing means.

### Citation Lists

### Patent Literatures

Patent Document 1: JP-A 2007-136957
Patent document 2: Japanese Patent No. 6708128
Patent document 3: Japanese Patent No. 6036543

### Summary of Invention

### Technical Problem

The present invention was made in view of the above problems and circumstances, and its solution is to provide an inkjet recording method and an inkjet recording device that excel in coating film durability and solder heat resistance, and that can stably discharge ink for a long period of time without causing ink thickening or polymerization reaction, even under ink degassing.

### Solution to Problem

In the process of studying the causes of the above problems, the inventor found that by controlling the amount of ink newly supplied from the main tank to the first sub-tank to be larger than the amount of ink remaining in the first sub-tank, even when a radically polymerizable ink containing a thermosetting component is used, excellent coating film durability, soldering heat resistance, and ejection stability may be achieved, and the present invention has been accomplished. In other words, the above issues related to the present invention are solved by the subject-matter of the appended claims.

### Advantageous Effects of Invention

The above means of the present invention may provide an inkjet recording method and an inkjet recording device that excel in coating film durability and solder heat resistance, and that may stably discharge ink for a long period of time without causing ink thickening or polymerization reaction even under ink degassing.

The expression mechanism of action mechanism of the effect of the present invention is not clear, but is inferred as follows. In the ink supply system of an inkjet printer, we found that the most effective way to prevent thermal polymerization of the ink after degassing is to keep the ink supplied to the degassing device as fresh as possible. In other words, as the ink stays in the first sub-tank for a longer period of time, the polymerization inhibitor contained in the ink is gradually deactivated, and thermal polymerization is likely to occur in the flow path downstream from the degassing device. Therefore, it is preferable to use up the ink in the first sub-tank as much as possible, rather than consuming it while adding more.

Therefore, in the present invention, the ink is fed so that the amount of ink newly supplied to the first sub-tank is larger than the amount of ink stored in the first sub-tank, so that the residence time in the first sub-tank may be shortened as much as possible, and it is possible to improve the stability of the ink in the ink supply system until it is supplied to the inkjet head. In other words, the ink may be stably dispensed from the inkjet head for a long period of time without thickening or polymerization reaction even under degassing. As a result, the coating film formed by ejecting such ink from the inkjet head has excellent durability because thermal decomposition of initiators and thermosetting components is suppressed as a result of shortening the ink residence time in the ink supply system, and the photo-curing and post-bake thermal curing efficiency, which is the original purpose, is enhanced. In addition, since the ink is a radical polymerizable inkjet ink containing a thermosetting component, the coating film durability and solder heat resistance required for solder masks, for example, may be obtained.

### Brief Description of Drawings

[FIG. 1A] This is a front view illustrating a schematic configuration of an inkjet recording device of an embodiment of the present invention.
[FIG. 1B] This is a plan view of an inkjet recording device.
[FIG. 2] This is a block diagram showing an internal structure of an inkjet recording device.
[FIG. 3] This is a diagram for explaining a flow path of the ink in the inkjet recording device of the present embodiment.
[FIG. 4] This is an enlarged view of a portion of the ink flow path shown in FIG. 3.
[FIG. 5A] This is a top-sectional view showing the first sub-tank.
[FIG. 5B] This is an arrow cross-sectional view along the cutting line V-V in FIG. 5A.
[FIG. 6A] This is a top cross-sectional view showing a variant of FIG. 5B.
[FIG. 6B] This is a top cross-sectional view showing a variant of Figure 5B.
[FIG. 6C] This is a top cross-sectional view showing a variant of Figure 5B.
[FIG. 7] This is a schematic cross-sectional view cut along a plane passing through the central axis of a cylindrical degassing module.
[FIG. 8] This is a flowchart showing an example of an ink supply process.

### Description of Embodiments

The inkjet recording method of the present invention is an inkjet recording method for recording an image by discharging an ink from an inkjet head. This method uses an inkjet recording device having: a main tank as an ink supply source; a first sub-tank connected to the main tank and supplied with the ink; a degassing device connected to the first sub-tank to degas the ink supplied from the first sub-tank; a second sub-tank that supplies the ink degassed by the degassing device to the inkjet head and controls a negative pressure applied to the inkjet head; a heating device for heating at least a flow path of the ink in a the first sub-tank; and a control unit for feeding the ink so that an amount of the ink newly supplied from the main tank to the first sub-tank is greater than an amount of the ink remaining in the first sub-tank, wherein the ink is a radical polymerizable ink containing a thermosetting component. This feature is a technical feature common to or corresponding to each of the following embodiments.

As an embodiment of the present invention, it is preferred that the control unit intermittently pumps the ink from the main tank to the first sub-tank in order to reduce the residence time in the first sub-tank, which is preferable in terms of ink stability. The inclusion of block isocyanate as a thermosetting component is preferred because it improves the resistance to high temperature and high humidity of the ink.

It is preferable to further provide a heating device to heat the ink flow path in the second sub-tank, and to have the surface area of the tank inner wall heated by the heating device in the first and second sub-tanks in contact with the ink be larger in the first sub-tank than in the second sub-tank. This is preferable in that the heating efficiency may be increased and the viscosity of the ink may be optimized for dispensing.

It is preferable that the capacity of the first sub-tank is larger than that of the second sub-tank, as this makes it easier to control ink temperature in the first sub-tank when printing at high productivity. It is also preferable that the capacity of the first sub-tank is larger than that of the second sub-tank, since as little residence time as possible in the flow path and sub-tank after the ink has been degassed is desirable from the standpoint of maintaining ink quality.

Hereinafter, the present invention, its constituent elements and forms and modes for carrying out the present invention will be described. In this application, "to" is used in the sense of including the numerical values described before and after "to" as lower and upper limits.

### [The inkjet recording method of the present invention]

The following is a detailed description of the inkjet recording method and inkjet recording device for the present invention, using the drawings. However, the scope of the invention is not limited to the illustrated examples but defined by the appended claims. In the following description, items having the same functions and configuration will be given the same symbols and their descriptions will be omitted.

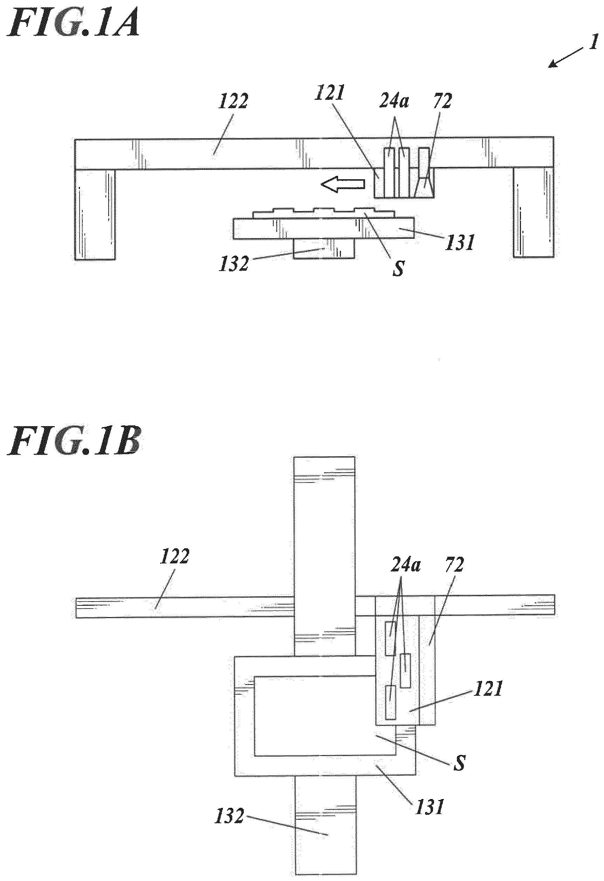

FIG. 1A is a front view of the inkjet recording device 1 of an embodiment of the present invention. FIG. 1B is a plan view of the inkjet recording device 1.

The inkjet recording device 1 is equipped with an inkjet head 24a (discharge operation unit), a UV irradiation unit 72, a scanning unit 121, a scanning guide unit 122, a transport stand 131, and a transport guide unit 132.

An object of ink discharge in the inkjet recording device 1 of this embodiment is, for example, a wiring substrate S (base material). This wiring substrate S is placed on a transport stand 131. The transport stand 131 may move in the direction (transport direction, sub-scanning direction) along the transport guide unit 132, such as a rail, with the wiring substrate S placed on it. The wiring substrate S has conductors (wiring conductors) on a substantially flat plate that forms signal wiring on an insulating substrate. The conductor is not limited to any particular material, but is, for example, copper (copper foil). The signal wiring protrudes and is positioned on the insulating substrate surface, and the wiring substrate S has a stepped portion. The ink that has landed on the wiring substrate S does not penetrate into the interior of the wiring substrate S, but is raised on the surface, cured, and fixed. Here, the insulating substrate surface is a plane, and the direction perpendicular outward to this plane is upward.

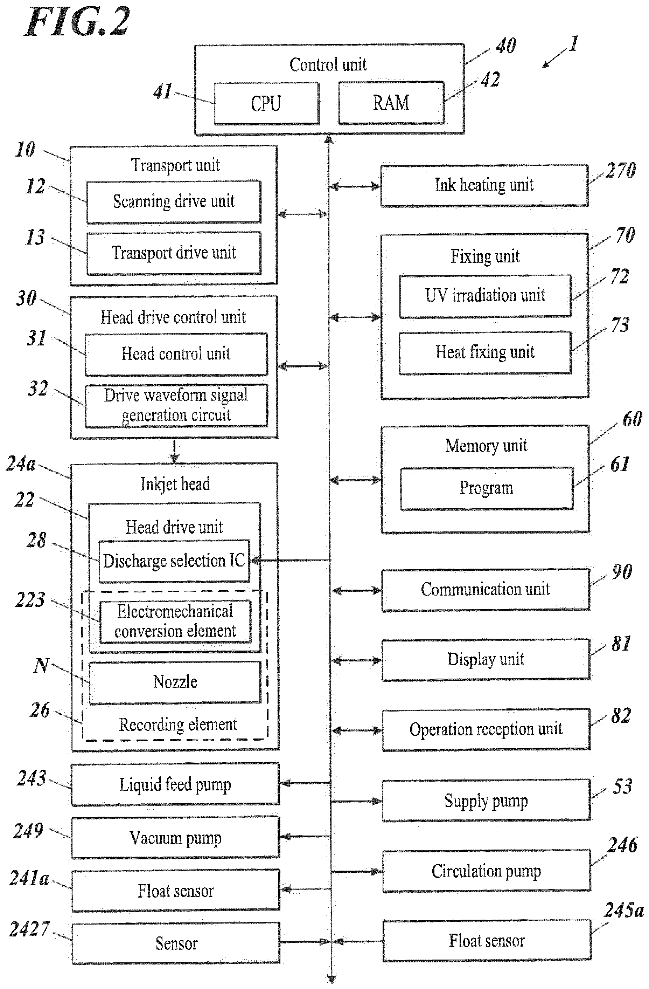

The inkjet head 24a has nozzles N (see FIG. 2) and discharges ink from the nozzles N onto the circuit board S. The amount of the ink discharged to each pixel range in each ink/discharge cycle may be selected from among multiple levels. The UV irradiation unit 72 irradiates ultraviolet light (UV light) onto the circuit board S on which ink has landed. The inkjet head 24a and UV irradiation unit 72 are fixed to the scanning section 121 and may move in the direction along the scanning guide 122 (scanning direction). In other words, they are moved (scanned) in a direction that intersects the direction of movement of the transfer table 131, in this case orthogonal to it. For these movements, linear motors, for example, may be used. The nozzles of the inkjet head 24a are lined up across the width of the circuit board S. By defining a sufficiently small nozzle array interval, it may be possible to complete printing in a single scan (single pass). Also, by repeating the scanning of the inkjet head 24a multiple times while moving the circuit board S, multi-pass (interlaced) ink dispensing is possible.

FIG. 2 is a block diagram showing the functional configuration of the inkjet recording device 1. The inkjet recording device 1 is equipped with a transport unit 10, inkjet head 24a (ink discharge unit), head drive control unit 30, fixing unit 70, control unit 40, memory unit 60, ink heating unit (heating device) 270, display unit 81, operation reception unit 82, communication unit 90, liquid feed pump 243, supply pump 53, vacuum pump 249, circulation pump 246, float sensor 241a, sensor 2427, and float sensor 245a. The control unit 40 and each of the parts are connected to each other via a bus or other means for communication.

The transport unit 10 moves the inkjet head 24a and the medium on which the image (film) is to be formed, in this case the wiring substrate S, relative to each other. As described above, for example, the inkjet head 24a may move in a predetermined direction (scanning direction) with respect to the circuit board S, and the circuit board S may move in a direction perpendicular to the scanning direction of the inkjet head 24a.

The transport unit 10 has a scanning drive unit 12 and a transport drive unit 13. The scanning drive unit 12 performs scanning by moving the inkjet head 24a through the scanning section 121 described above. The scanning drive unit 12 has, for example, a linear motor and moves the inkjet head 24a directly or indirectly through a fixed member of the inkjet head 24a.

The transport drive unit 13, for example, moves a base (transport stand 131), belt, or other placing material on which the wiring substrate S is placed. The transport drive unit 13 is capable of moving the placing material back and forth.

The inkjet head 24a has a head drive unit 22 and a plurality of nozzles N. The ink is ejected from the nozzles N in response to drive signals output by the head drive unit 22. The head drive unit 22 has a discharge selection IC28 (Integrated Circuit), an electromechanical conversion element 223, and other components. The discharge selection IC 28 performs switching operations to cause the electromechanical conversion element 223 corresponding to each nozzle N to output drive signals according to whether or not ink is discharged from each nozzle N and the amount of ink discharged based on image data. The electromechanical conversion element 223 is, for example, a piezoelectric element, which produces a shape change in response to the input drive signal, and the shape change causes pressure fluctuations in the ink in the ink flow path connected to the nozzle N. The electromechanical conversion element 223 and nozzle N constitute the recording element 26.

The head drive control unit 30 includes a head control unit 31 and a drive waveform signal generation circuit 32, which outputs drive waveform signals (analog signals) related to ink discharge to the inkjet head 24a at a predetermined time cycle (ink discharge cycle) based on the output data (digital data) of the drive waveform signal generation circuit 32. The drive waveform signals related to ink discharge are output to the inkjet head 24a at a predetermined time cycle (ink discharge cycle). The drive waveform signals pertaining to ink discharge may be a combination of multiple pulse signals. It may be possible to output multiple different types of drive waveform signals with different waveform patterns (including not only waveforms but also pulse lengths, amplitudes, and changes in voltage values) according to the respective ink discharge volumes. Alternatively, it may be possible to output a continuous number of driving pulses (multi-pulse system) in accordance with the amount of ink droplets per pixel. In this case, the ink droplets ejected by each driving pulse are merged in flight or land within the same pixel range. The amount of ink may be set to the amount of ink droplets that will provide the minimum thickness (e.g., 15 µm) of the insulating film described below, taking into consideration the surface characteristics of the substrate S, the temperature (viscosity characteristics) at the time of ink ejection, and the time interval between the landing of ink droplets and their temporary fixing by UV light irradiation in the UV irradiation unit 72. In addition, it may be possible to output a non-discharge waveform pattern to agitate the ink in the nozzle N, not only when the ink is discharged.

In addition to or instead of the above methods, the amount of ink ejected per pixel (amount of shot) may be controlled by other methods, such as adjusting the state of the ink liquid surface (meniscus) in the nozzle N by adjusting the ink pressure (normally, the pressure is negative to prevent ink leakage) when no drive pulse is applied, or alternatively, the drive frequency may be changed and adjusted. The amount of ink droplets may also be adjusted by applying drive pulses of the drive wave pattern while the meniscus is vibrated by applying drive pulses of the appropriate non-discharge wave pattern in advance before the wave pattern for ink discharge.

The fixing section 70 operates to fix the ink that has landed on the wiring substrate S. Since the ink of the present invention is thermosetting and curable by active energy rays (UV light), as described below, the fixing section 70 has a UV irradiation unit 72 and a heat fixing unit 73, corresponding to these properties. The UV irradiation unit 27 is fixed to the scanning section 121 and scanned together with the inkjet head 24a as described above to temporarily fix the ink that has landed on the circuit board S. The UV irradiation unit 27 has, for example, a light emitting diode (LED) that emits ultraviolet rays, and applies a voltage to the LED to cause it to emit light and emit ultraviolet rays (UV light). The UV irradiation unit 72 may be equipped with a light shielding wall to block leakage of UV light outside the desired irradiation range, if necessary.

The configuration of emitting UV light in the UV irradiation unit 72 is not limited to LEDs. The UV irradiation unit 72 may have, for example, a mercury lamp. If the ink has a property of being cured and fixed by active energy rays other than UV light, the UV irradiation unit 72 may have a well-known emitting source (light source) that emits active energy rays to cure the ink in question instead of the configuration emitting UV light described above.

The heating and fixing section 73 has a heating unit, such as an infrared heater or an electric heating wire heater, for example, and directly or indirectly heats the circuit board S to finally fix the temporally fixed ink. The heating and fixing section 73 is positioned so that, for example, after the ink is deposited and the temporally fixing is performed by the inkjet head 24a and the UV irradiation unit 72, the final fixing is performed after the wiring substrate S is transported downstream with respect to the transport direction. The heating and fixing section 73 may be located in an enclosure surrounding the area of the wiring substrate S and the portion of the transport member on which it is placed, so that the heat generated by the heating section is retained inside the enclosure and efficiently maintained at an appropriate curing temperature. In this case, it is not necessary to always operate the heating unit during heating, but only if the temperature is maintained within the set range for the above curing temperature.

The heating and fixing unit 73 may not be provided by the inkjet recording device 1, but may be provided by a separate heating and fixing device. The heating and fixing device may be a post-processing device of the inkjet recording device 1, and the transport unit 10 may be capable of directly feeding the wiring substrate S to the heating and fixing device on an extension line of the movement direction of the transport stand 131, or the wiring substrate S removed from the transport stand 131 of the inkjet recording device 1 may be set again in the heating and fixing device, or the user may manually move the wiring board S.

The control unit 40 is responsible for overall control of the operation of the various parts of the inkjet recording device 1. The control unit 40 has a CPU 41 (Central Processing Unit) and RAM 42 (Random Access Memory). The CPU 41 is a hardware processor that performs various arithmetic operations and executes programs 61 stored in the memory unit 60. RAM 42 provides a memory space for control to CPU 41 and store temporary data.

Specifically, the control unit 40 performs the following processing for the inkjet recording device 1. That is, the control unit 40 controls the amount (supply amount) newly supplied from the main tank 51 to the first sub-tank 241 based on detection data from a float sensor 241a provided in the first sub-tank 241, which will be described later. The supply pump 53 and the valve 55 are operated to feed the ink from the main tank 51 to the first sub-tank 241 so that the ink amount (residual amount) is larger than the ink amount stored in the first sub-tank 241. In this way, the control unit 40 intermittently pumps ink from the main tank 51 to the first sub-tank 241. Details are described below.

The memory unit 60 includes at least nonvolatile memory and stores the program 61 and setting data. Nonvolatile memory includes, for example, flash memory. A hard disk drive (HDD) may also be included in the nonvolatile memory herein.

The ink heating unit 270 heats the ink in the inkjet head 24a and the ink supply path to the inkjet head 24a to maintain the ink at an appropriate temperature. Since ink undergoes a phase change between sol-gel depending on temperature as described below, the ink lacks fluidity in its gel state at room temperature, making it difficult to supply and dispense the ink. The ink heating section 270 heats the ink to a suitable temperature to keep the ink in a sol state and enable supply and proper dispensing. The suitable temperature should be determined so that the ink is quickly dissipated by the wiring substrate S after landing on the wiring substrate S and gelling in a suitable time. The ink heating section 270 includes, as described below, electric heating wires and rubber heaters. When the electric heating wires and rubber heaters are energized, the electric heating wires and rubber heaters contact the ink flow paths and transfer heat to the ink to heat the ink.

Display section 81 displays various statuses, menus, and other information on a display screen based on control by a control unit 40. Display section 81 has, for example, a display screen and LED (Light Emitting Diode) lamps. The display screen is not limited to, but is, for example, an LCD (Liquid Crystal Display). The LED lamps are lit (including blinking operation) in positions and colors corresponding to each status by the control unit 40 according to, for example, power supply status and error occurrence status.

The operation reception section 82 accepts input operations by the user or others from outside and outputs them as input signals to the control unit 40. The operation reception section 82 has, for example, a touch panel and pushbutton switches. The touch panel may be positioned over the display screen of the display section 81. The operation reception section 82 may also have various other operation switches.

The communication unit 90 controls the transmission and reception of data (signals) to and from external devices and other devices in accordance with prescribed communication standards. For example, the communication unit 90 controls communication according to the LAN (Local Area Network) standard. The communication unit 90 may also be connectable to peripheral devices according to the USB (Universal Serial Bus) standard.

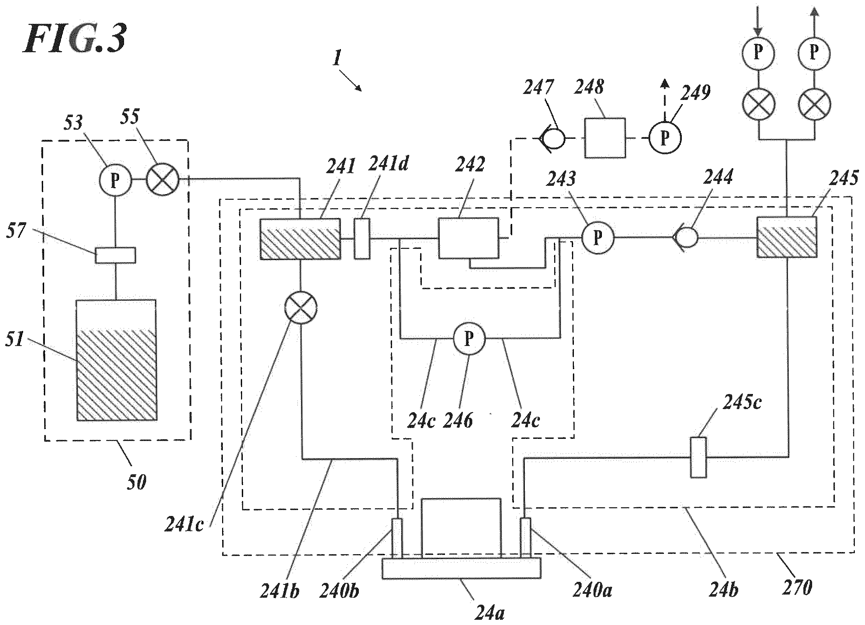

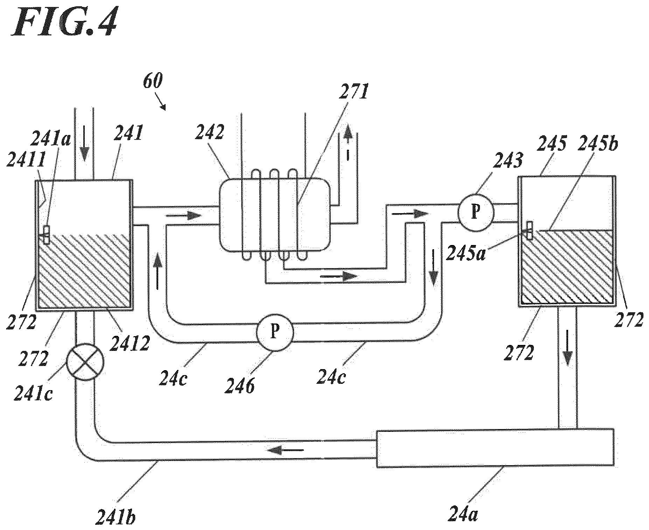

FIG. 3 illustrates the flow path of the ink in the inkjet recording device 1. FIG. 4 is an enlarged view of a portion of the ink flow path.

In the inkjet recording device 1 of the present embodiment, the ink pumped by supply pump 53 from main tank 51 as ink supply source 50 through filter 57 is supplied to each inkjet head 24a through valve 55 (e.g., solenoid valve) and ink flow path 24b. It is configured such that the ink that has not been ejected from each inkjet head 24a may be returned to the ink flow path 24b.

A first sub-tank 241, a filter 241d, a degassing module 242, a liquid feed pump 243, a check valve 244, a second sub-tank 245, and a filter 245c are provided in the ink flow path 24b. These are connected by a hollow circular tubular structure member, for example, although this is not limited.

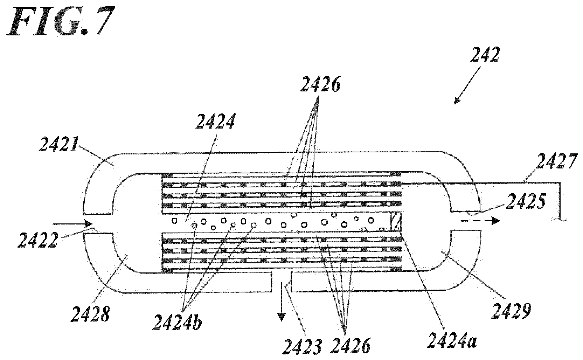

In addition, a circulation pump 246 is provided in parallel with the degassing module 242, and the ink flowing out of the degassing module 242 is pumped through a circulation path 24c connected to both ends of the degassing module 242. It is preferable to be able to return to the front of the entrance 2422 (see FIG. 7).

These inkjet head 24a, ink flow path 24b, and circulation path 24c are heated and kept warm by an ink heating unit 270, such as a heater or a heat-transferring member that transmits heat from the heater, to maintain the ink at an appropriate temperature. For example, rubber heater 272 or electric heating wire 271 (see FIG. 4) is used as the heater of the ink heating section 270, which generates heat when energized.

As a heat-transfer member, a heat-conductive plate made of a material with high thermal conductivity, e.g., various metals (alloys), is preferably used to cover the pipes of the ink flow path 24b and the circulation path 24c.

The degassing module 242 is connected in series with a check valve 247, a trap 248, and a vacuum pump (degassing pump) 249 to form a degassing device.

The ink in the main tank 51 of the ink supply source 50 is maintained at room temperature (25 °C).

### <First Sub-tank>

The first sub-tank 241 is one or more ink chambers that store ink pumped out of the main tank 51 by the supply pump 53 and valve 55. The capacity of the first sub-tank 241 is preferably smaller than the capacity of the main tank 51 and larger than the capacity of the second sub-tank 245 described below. Specifically, the capacity of the first sub-tank 241 is preferably larger than the capacity of the second sub-tank 245 by a factor ranging from 1.1 to 2.0 times, although this depends on the number of inkjet heads mounted and the design.

The surface area in contact with the ink of the tank inner wall heated by the ink heating unit 270 (also referred to as "wetted surface area") in the first and second sub-tanks 241 and 245 is preferably larger in the first sub-tank 241 than in the second sub-tank 245. Specifically, the surface area in the first sub-tank 241 is preferably larger than that in the second sub-tank 245 within the range of 1.1 to 5.0 times larger.

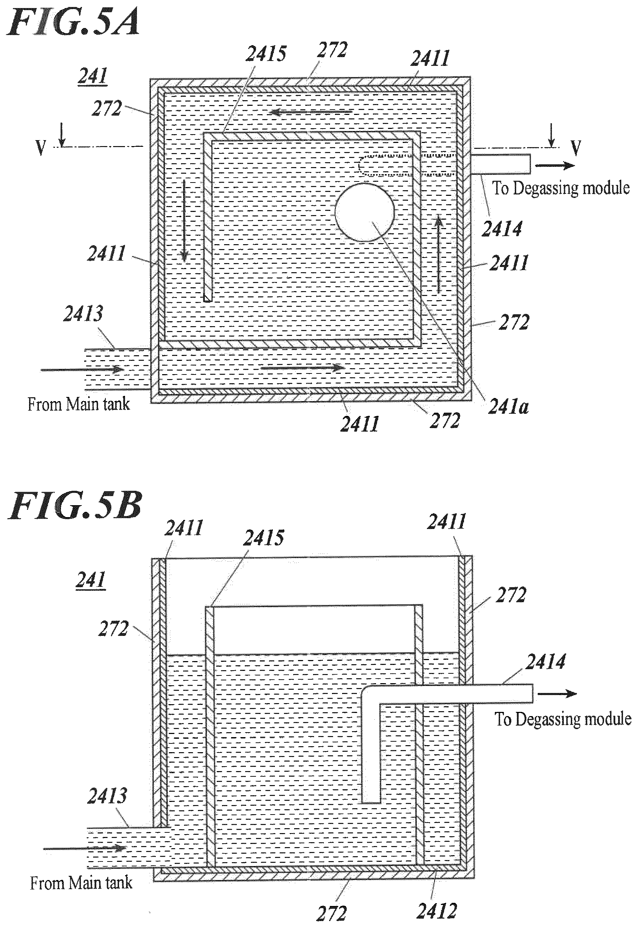

Here, "the surface area in contact with the ink of the inner wall of the tank heated by the ink heating unit 270 in the first sub-tank 241 (wetted surface area)" means, for example, as shown in FIG. 4 and FIG. 5A and FIG. 5B, the surface area of the outer surface (outer wall surface) of the side wall portion 2411 and bottom portion 2412 of the first sub-tank 241 heated by rubber heaters 272 on the outer surface (outer wall surface) of the side wall part 2411 and bottom part 2412 of the first sub-tank 241 and heat is transmitted to the ink in the tank via the side wall part 2411 and bottom part 2412 heated by the rubber heater 272, the surface area where the ink contacts the inner surface of said side wall part 2411 and bottom part 2412. Not only in this case, but also as shown in FIG. 5A and FIG. 5B, in addition to the rubber heater 272 provided on the outer surface of the side wall portion 2411 and bottom portion 2412 of the first sub-tank 241, a partition plate 2415 is provided in the first sub-tank 241, and even when heat is transmitted to the ink in the tank via the partition plate 2415 heated by the rubber heater 272, the surface area of the partition plate 2415 and the surface area of the ink are included. The same definition as above applies to the second sub-tank 245.

The term "inner tank wall" refers, for example, to the inner surfaces of the sidewalls 2411 and bottom 2412 in the first sub-tank 241 and the surface of the partition plate 2415 in the first sub-tank 241, and the same definition applies to the second sub-tank 245 as above.

To increase the wetted surface area in the first sub-tank 241, the first sub-tank 241 may be preferably configured with a partition plate 2415 on the outer surface of the side wall 2411 of the first sub-tank 241, the bottom 2412, and inside the first sub-tank 241, as shown in FIG. 5A and FIG. 5B, for example.

The following describes the arrangement pattern of the ink heating section 270 and partition plate 2415 in the first sub-tank 241.

FIG. 5 shows a schematic diagram of the first sub-tank, with FIG. 5A showing the top cross section and FIG. 5B showing a cross-sectional view taken along line V-V in FIG. 5A.

The first sub-tank 241 is provided with a rubber heater 272 as an ink heating section 270 on the outer surface of the side wall portion 2411 and bottom portion 2412. In the first sub-tank 241, a partition plate 2415 is provided in a rectangular shape in a top view so that it spirals counterclockwise from the left side wall portion 2411 toward the center, thereby forming an ink flow path. The partition plate 2415 is preferably thermally conductively connected to the rubber heater 272.

The left side wall 2411 of the first sub-tank 241 has an inlet 2413 into which ink supplied from the main tank 51 flows, and an ink flow path is connected to the inlet 2413.

At the most downstream position of the ink flow path in the first sub-tank 241, i.e., near the center of the first sub-tank 241, there is an outlet 2414 that is connected to the degassing module (degassing device) 242, so that ink flowing in from the inlet 2413 flows counter-clockwise along the ink flow path in the first sub-tank 241 to the degassing module 242 via the outlet 2414. The ink flows clockwise along the ink flow path in the first sub-tank 241 and is sent to the degassing module 242 via the outlet 2414.

The first sub-tank 241 is equipped with a float sensor 241a as a liquid level sensor. Although the location of the float sensor 241a is not particularly limited, it is preferable to install it at the most downstream position of the ink flow path in the first sub-tank 241. In FIG. 5A, it is installed near the center of the first sub-tank 241.

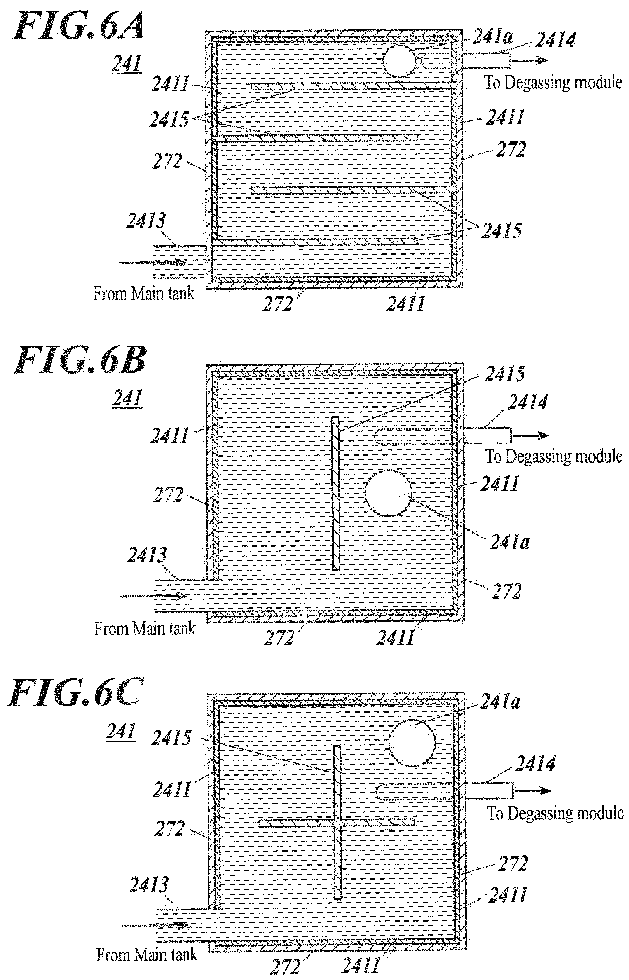

The arrangement pattern of the 2415 partition plates in the first sub-tank 241 is not limited to FIG. 5A and FIG. 5B, but it may be, for example, the arrangement pattern shown in FIG. 6A through FIG. 6C.

FIG. 6A through FIG. 6C are top cross-sectional views of the first sub-tank showing variations of FIG. 5A and FIG. 5B.

The first sub-tank 241 shown in FIG. 6A has a plurality of partition plates 2415 installed alternately between the left and right side walls 2411 and 2411 facing each other in the first sub-tank 241. As a result, ink flow paths are formed in the first sub-tank 241 in a serpentine manner.

At the most downstream position of the ink flow path in the first sub-tank 241, there is an outlet 2414 that is connected to the degassing module 242, so that ink flowing in from the inlet 2413 meanders through the ink flow path in the first sub-tank 241 and is sent to the degassing module 242 through the outlet 2414. The ink flows through the inlet 2413 and meanders through the ink flow path in the first sub-tank 241 to the degassing module 242 via the outlet 2414.

A float sensor 241a is provided near the degassing module 242 of this first sub-tank 241.

Rubber heaters 272 are also provided on the outer surfaces of the sidewalls 2411 and bottom 2412 of the first sub-tank 241.

The first sub-tank 241 shown in FIG. 6B has a single partition plate 2415 installed in the center of the first sub-tank 241 so that it is roughly parallel to the left and right side walls 2411 and 2411 to partition the interior of the first sub-tank 241 to the left and right. This divides the inside of the first sub-tank 241 into two spaces on the left and right, forming ink flow paths.

The space on the right side of the first sub-tank 241 is provided with an outlet 2414 that is connected to the degassing module 242, so that ink flowing in from the inlet 2413 flows from the left side to the right side in the first sub-tank 241 and is sent to the degassing module 242 through the outlet 2414. A float sensor 241a is located near the degassing module 24 in this first sub-tank 241. Rubber heaters 272 are also provided on the outer surfaces of the sidewalls 2411 and bottom 2412 of the first sub-tank 241.

The first sub-tank 241 shown in FIG. 6C has a partition plate 2415 in the center of the first sub-tank 241 so that it is cross-shaped from the top view. This creates clockwise and counterclockwise ink flow paths in the first sub-tank 241.

At the most downstream position of the ink flow path in the first sub-tank 241, there is an outlet 2414 that is connected to the degassing module 242, so that the ink flowing in from the inlet 2413 flows clockwise or counterclockwise through the ink flow path in the first sub-tank 241 to the degassing module 242 via outlet 2414. The ink flowing in from the inlet 2413 flows clockwise or counterclockwise through the ink flow path in the first sub-tank 241 to the degassing module 242 via outlet 2414.

A float sensor 241a is provided near the degassing module 242 of this first sub-tank 241. Rubber heaters 272 are also provided on the outer surfaces of the sidewalls 2411 and bottom 2412 of the first sub-tank 241.

The first sub-tank 241 shown in FIGs 6A and FIG. 6B, and FIG. 6A to FIG. 6C is an example of an embodiment of the invention and the present invention is not limited to these.

For example, the first sub-tank 241 shown in FIG. 5A and FIG. 5B and FIG. 6A to FIG. 6C is configured to have a rubber heater 272 on the outer surface of a side wall 2411 and a bottom 2412. A configuration in which a rubber heater 272 is provided on the inner surfaces of the side wall portion 2411 and the bottom portion 2412 may be employed. In this case, it is preferable to cover the surface of the rubber heater 272 with another material to prevent the rubber heater 272 from coming into direct contact with the ink, for durability and other reasons.

The first sub-tank 241 shown in FIG. 5A and FIG. 5B and FIG. 6A to FIG. 6C is configured with a partition plate 2415 inside the first sub-tank 241, and the partition plate 2415 is thermally connected to the rubber heater 272 provided outside the first sub-tank 241, but not limited to this. However, this configuration is not limited to this, and a rubber heater may be provided inside the two partition plates (not shown in the figure).

It is preferable to use a metal with high thermal conductivity, such as aluminum or copper, as the flow path component and the partition plate 2415 after the first sub-tank 241, and aluminum is more preferable from the standpoint of cost and workability.

The float sensor 241a in the first sub-tank 241 detects the position of the ink liquid level. Based on the detection data of the liquid level position by the float sensor 241a, the control unit 40 operates the valve 57 to open/close and the supply pump 53.

Specifically, the control unit 40 operates the valve 55 and supply pump 53 based on the detection data by the float sensor 241a so that the amount of ink newly supplied from the main tank 51 to the first sub-tank 241 is greater than the amount of ink stored (remaining) in the first sub-tank 241. This shortens the residence time of the ink in the first sub-tank 241.

In addition to the aforementioned float sensor 241a, which detects the liquid level by the position of a float, ultrasonic sensors that measure the reflection of ultrasonic waves on the liquid surface, dielectric capacitance sensors that detect the liquid level by the dielectric constant difference between gas and liquid, and pressure sensors that detect the weight and pressure of the liquid at the bottom of the tank may be used as liquid level sensors. Pressure sensors that detect the weight and pressure of the liquid at the bottom of the tank may also be used.

### <Degassing module>

The degassing module 242 performs a degassing process to remove air and other gases from the incoming ink and discharges the degassed ink. The degassing module 242 may usually reduce the air concentration in the ink to a level that does not adversely affect the ink dispensing with a single deaeration, but multiple deaeration cycles may further reduce the air concentration.

FIG. 7 shows a schematic cross-sectional view of a cylindrical degassing module 242 cut in a plane through the central axis. The degassing module 242 has a central tube 2424 surrounded by a number of hollow-fiber membranes (permeable component) 2426 inside the outer shell 2421. One end of the central tube 2424 connects to the ink inlet 2422, and the other end is sealed by a plug 2424a. The outer wall of the center tube 2424 has numerous fine holes 2424b (perforated holes), and the ink that flows into the center tube 2424 from the ink inlet 2422 flows out through these fine holes 2424b to the surrounding area, passes through the hollow fiber membrane 2426, and flows out from the ink outlet 2423. These ink inlet 2422, the inside of the central tube 2424, the outside of the central tube 2424 between the many hollow fiber membranes 2426, and the ink outlet 2423 form the ink flow path 2428.

The hollow fiber membrane 2426 has a number of hollow microfiber structures that are closed at one end, and its membrane surface is gas permeable. The other end of the microfiber structure of the hollow fiber membrane 2426 is connected to the gas outlet 2425, and air is drawn in by the vacuum pump 249 to depressurize the interior of the microfiber structure of the hollow fiber membrane 2426. In this state, when the ink comes into contact with the membrane surface of the hollow fiber membrane 2426, only the air and other gases in the ink selectively permeate the membrane surface and the ink is degassed. The inside of the fine-fiber structure of the hollow-fiber membrane 2426, the gas outlet 2425, and other parts constitute the gas flow path 2429.

The aforementioned degassing module 242 is preferably an external reflux type hollow fiber membrane degassing module in which the inside of the hollow fiber membrane 2426 is degassed and the ink is distributed outside of the hollow fiber membrane 2426 from the standpoint of degassing efficiency and process flow rate, but other methods such as internal reflux type may also be used.

In addition, it is preferable that a sensor 2427 that detects that the ink flow path 2428 is filled with the ink is provided in the ink flow path 2428 of the degassing module 242, at a position where the ink that flows in from the ink inlet 2422 is least likely to reach.

The position in the ink flow path 2428 where ink is least likely to reach is the position where, if ink reaches that position, the entire area in the ink flow path 2428 may be said to be filled with the ink, such as between the base ends of the many hollow fiber membranes 2426, or at the position farthest from the ink inlet 2422 and away from the ink outlet 2423. The position of the sensor 2427 is the position at which the ink is filled with the ink. When the sensor 2427 detects that the ink has arrived at the location where it is provided, it outputs the detection result to the control unit 40.

The liquid feed pump 243 sends the ink that has flowed out of the ink outlet 2423 of the degassing module 242 to the second sub-tank 245. A check valve 244 is provided between the liquid feed pump 243 and the second sub-tank 245 to prevent backflow of ink once sent to the second sub-tank 245. The liquid feed pump 243 is provided between the degassing module 242 and the second sub-tank 245, but it is not limited to this and may be provided between the first sub-tank 241 and the degassing module 242.

### <Second sub-tank>

The second sub-tank 245 is a small ink chamber in which the ink degassed by the degassing module 242 is temporarily stored, and should have a smaller capacity than the first sub-tank 241.

The surface area in contact with ink (wetted surface area) of the inner wall heated by the ink heating unit 270 in the second sub-tank 245 is preferably smaller than in the first sub-tank 241.

In order to reduce the aforementioned wetted surface area in the second sub-tank 245, the second sub-tank 245 is not, for example, configured with a partition plate 2415 as in the first sub-tank 241, but preferably configured only with a rubber heater 272 on the outer surface of the side wall or the bottom of the second sub-tank 245 (see FIG. 4).

The second sub-tank 245 is connected to the inlet 240a of each inkjet head 24a, and the ink is supplied to each inkjet head 24a from this second sub-tank 245 according to the amount of ink ejected from the nozzles. The second sub-tank 245 is equipped with a float sensor 245a, and a predetermined amount of ink is stored by the control unit 40 operating the liquid feed pump 243 based on the detected data of the liquid level position by the float sensor 245a.

The second sub-tank 245 is also provided with a floating lid 245b to cover the surface of the degassed ink. Since the second sub-tank 245 is open to the atmosphere, the floating lid 245b reduces the contact area between the atmosphere and the degassed ink to prevent air from re-entering the ink. In the inkjet recording device 1 used for industrial applications, the amount of air that re-enters the ink is often small because the degassed ink is not stored in the second sub-tank 245 for a long time due to continuous image formation and other processes. Therefore, the second sub-tank 245 may be configured without this floating lid 245b.

The ink that has not been ejected from the nozzles of the inkjet head 24a may be returned from the outlet 240b to the first sub-tank 241 via recovery path 241b and valve 241c. When the ink needs to be drained from the inkjet head 24a during maintenance, the ink in the inkjet head 24a may be recovered without wasting the ink by opening the valve 241c.

A trap 248 is provided between the degassing module 242 and the vacuum pump 249 via a check valve 247. The hollow fiber membrane 2426 normally does not allow a liquid ink to permeate through, but depending on the degree of negative pressure caused by the vacuum pump 249, a small amount of ink may permeate through. If this permeated ink reaches the vacuum pump 249, the vacuum pump 249 will deteriorate, so the trap 248 collects the ink before it reaches the vacuum pump 249. The ink collected by the trap 248 may be drained out by opening the valve shown in the figure connected to the trap 248.

Here, as described above, the ink in the ink flow path 24b is heated and maintained by the ink heating unit 270. The temperature is preferably heated to be in the range of 70 to 80 °C, for example. In particular, a rubber heater 272 is provided in the first sub-tank 241 in this system. By providing such a rubber heater 272, the ink sent from the main tank 51 may be sufficiently heated to a predetermined temperature before being pumped to the degassing module 242. Especially in the case of gel inks, it is necessary to completely dissolve the ink by heating.

The degassing module 242 is also provided with an electric heating wire 271. Since it is difficult for heat from the heaters and heat transfer plates covering the outside of the degassing module 242 to be transmitted to the inside of the degassing module 242, by separately heating and conducting heat to the inside in this way, the ink is more efficiently heated inside the degassing module 242 where the ink stays longer than in the normal ink flow path 24b.

Furthermore, in this inkjet recording device 1, even when the ink supply to the inkjet head 24a is stopped, the ink in the degassing module 242 is circulated by the circulation pump 246 as appropriate, so that the entire ink flowing through the degassing module 242 and circulation path 24c is properly and the ink is heated and kept warm in a well-balanced manner. Even if the ink is cold, such as when the inkjet recording device 1 is turned on, the ink may be quickly heated to enable circulation and dispensing at an appropriate temperature.

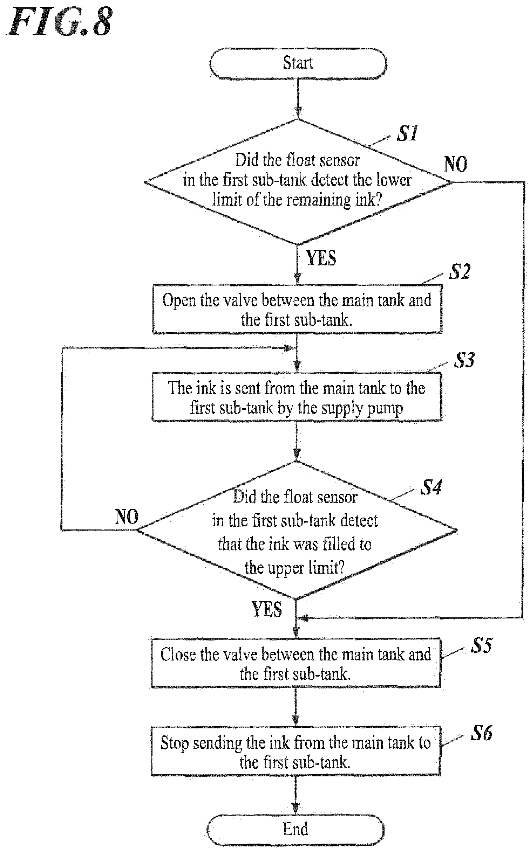

Next, an example of the ink supply process performed by the control unit 40 in the inkjet recording device 1 configured as described above is explained below with reference to FIG. 8. FIG. 8 is a flow chart showing an example of the ink supply process.

First, the control unit 40 determines whether the float sensor 241a in the first sub-tank 241 has detected the lower limit of the amount of ink stored in the first sub-tank 241 (remaining ink) (step S1).

If the remaining ink level is determined that the lower limit is not detected (step S1; NO), the valve 55 between the main tank 51 and the first sub-tank 241 is closed (step S5), and ink feed from the main tank 51 to the first sub-tank 241 is stopped (step S6).

When it is determined that the remaining ink level has detected the lower limit (step S1; YES), the control unit 40 opens the valve 55 between the main tank 51 and the first sub-tank 241 (step S2).

Next, the control unit 40 pumps the ink from the main tank 51 to the first sub-tank 241 by the supply pump 53 (step S3). Then, the float sensor 241a in the first sub-tank 241 detects the upper limit of the remaining ink in the first sub-tank 241 and determines whether the ink is filled or not (step S4).

If it is determined that the remaining ink in the first sub-tank 241 has not detected the upper limit (step S4; NO), ink continues to be pumped by the supply pump 53 (step S3). When it is determined that the remaining ink in the first sub-tank 241 has detected the upper limit (step S4; YES), the control unit 40 closes the valve 55 between the main tank 51 and the first sub-tank 241 (step S5) and stops ink feed from the main tank 51 to the first sub-tank 241 (step S 6).

In this way, the control unit 40 constantly controls the operation of valve 55 and supply pump 53 based on the detection result of the float sensor 241a in the first sub-tank 241 to pump ink intermittently, so that the amount of ink newly supplied to the first sub-tank 241 is made larger than the amount of ink stored in the first sub-tank 241.

### <Ink>

The ink used in the inkjet recording method of the present invention is a radical polymerization inkjet ink containing a thermosetting component. That is, it contains a compound having a thermosetting functional group. It is also preferred that the ink of the present invention contains a gelling agent and undergoes a sol-gel phase transition depending on temperature. Furthermore, it is preferred that the ink of the present invention contains a compound having a photo-polymerizable functional group and a photo-polymerization initiator. The inks for the present invention are not limited to gel inks as described above, but may also be water-based inks or inks with other physical properties.

### (1) Compound having a thermosetting functional group

The thermosetting functional groups according to the present invention are, for example, those referred to in reviews such as "Refinement of Thermosetting Polymers (Tsuyoshi Endo, C. M. C. Co., Ltd., 1986), "Latest Binder Technology Handbook" Chapter II-I (Yuji Harasaki, General Technical Center, 1985), "Synthesis, Design and Development of New Applications of Acrylic Resins" (Takayuki Otsu, Chubu Management Development Center Publishing Division, 1985), and "Functional Acrylic Resins" (Eizo Omori, Techno System, 1985). Specifically, the thermosetting functional group is at least one selected from the group consisting of a hydroxy group, a carboxy group, an isocyanate group, an epoxy group, a (meth)acrylic group, a maleimide group, a mercapto groups, and an alkoxy groups. It is preferred in terms of thermosetting properties.

### (Hydroxy group)

Examples of the compound having a hydroxy group include various hydroxy group-containing (meth)acrylates (e.g., 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, and polypropylene glycol mono(meth)acrylate), addition reaction products of various hydroxy group-containing (meth)acrylates and ε-caprolactone, various hydroxy group-containing vinyl ethers (e.g., 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether, and 6-hydroxyhexyl vinyl ether), addition reaction products of the above various hydroxyl group-containing vinyl ethers and ε-caprolactone, various hydroxyl group-containing allyl ethers (e.g., 2-hydroxyethyl (meth)allyl ether, 3-hydroxypropyl (meth)allyl ether, 2-hydroxypropyl (meth)allyl ether, 4-hydroxybutyl (meth)allyl ether, 3-hydroxybutyl (meth)allyl Ether, 2-hydroxy-2-methylpropyl (meth)allyl ether, 5-hydroxypentyl (meth)allyl ether, and 6-hydroxyhexyl (meth)allyl ether, addition reaction products of the above various hydroxy group-containing allyl ethers and ε-caprolactone.

### (Carboxy group)

Examples of the compound having a carboxy group include various monomers containing a carboxy group (e.g., (meth)acrylic acid, crotonic acid, itaconic acid, maleic acid, and fumaric acid), monoesters of various α,β-unsaturated dicarboxylic acids and monohydric alcohols having 1 to 18 carbon atoms (e.g., monomethyl fumarate, monoethyl fumarate, monobutyl fumarate, monoisobutyl fumarate, monotert-butyl fumarate, monohexyl fumarate, monooctyl fumarate, 2-ethyl hexyl fumarate, maleic acid monomethyl maleate, monoethyl maleate, monobutyl maleate, isobutyl maleate, tert-butyl maleate, monohexyl maleate, monooctyl maleate, and 2-ethylhexyl maleate), itaconic acid monoalkyl esters (e.g., monomethyl itaconic acid, monoethyl itaconic acid, monobutyl itaconic acid, monoisobutyl itaconic acid, monohexyl itaconic acid, monooctyl itaconic acid, and mono-2-ethylhexyl itaconic acid). Furthermore, acrylate compounds containing a carboxy group may be mentioned. For example, they may be obtained by copolymerization of unsaturated carboxylic acids such as acrylic acid, methacrylic acid, itaconic acid, maleic acid, and their anhydrides with acrylic monomers, and among the unsaturated carboxylic acids, acrylic acid and methacrylic acid are preferably used. In addition, as acrylic monomers constituting acrylic copolymers containing a carboxylic acid group, isoamyl (meth)acrylate, 2-ethylhexyl (meth)acrylate, isooctyl (meth)acrylate, isononyl (meth)acrylate, isomyristyl acrylate, ethyl (meth)acrylate, butyl (meth)acrylate, 2-hydroxyethyl (meth)acrylate, 2-hydroxypropyl (meth)acrylate, hydroxybutyl (meth)acrylate, hydroxyhexyl (meth)acrylate, N-methylol (meth)acrylamide, glycidyl (meth)acrylate, (meth)acrylamide, N,N-dimethyl (meth)acrylamide, N,N-diethyl (meth)acrylate-acrylamide, (meth)acryloyl morpholine, (meth)acetonitrile, vinyl pyrrolidone, N-cyclohexylmaleimide, itaconimide, and N,N-dimethylaminoethyl (meth)acrylamide. In addition, vinyl acetate, and styrene may also be used. These monomers may be used singly or two or more of these monomers may be used in combination.

### (Isocyanate group)

Examples of the compound having an isocyanate group are not limited to those having two or more isocyanate groups in the molecule. Specific examples include aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylene diisocyanate, xylylene diisocyanate (XDI), tetramethylxylylene diisocyanate (TMXDI), tolidine diisocyanate (TODI), and 1,5-naphthalene diisocyanate (NDI); alicyclic polyisocyanates such as transcyclohexane-1,4-diisocyanate, isophorone diisocyanate (IPDI), H6XDI (hydrogenated XDI), H12MDI (hydrogenated MDI), and H6TDI (hydrogenated TDI); and their biuret, isocyanurate and carbodiimide modified forms.

As the acrylate or methacrylate compound having an isocyanate group, any compound having an isocyanate group and an acryloyl group or a methacryloyl group in the molecule may be used. Examples thereof include 2-acryloyloxyethyl isocyanate, 2-methacryloyloxyethyl isocyanate, 2-isocyanatoethyl acrylate, 3-isocyanatopropyl acrylate, 2-isocyanatoethyl methacrylate, and 3-isocyanatopropyl methacrylate. In addition, reaction products of hydroxyalkyl acrylates such as hydroxyethyl acrylate or methacrylates and polyisocyanates such as tolylene diisocyanate may also be used.

Among the above compounds having an isocyanate group, multifunctional isocyanate compounds having an isocyanate group protected by a thermally dissociable blocking agent (block isocyanate groups) are preferable in that they improve high temperature and high humidity resistance.

In the case of multifunctional isocyanate compounds having an isocyanate group protected by a blocking agent, an isocyanurate ring generated from isocyanate trimerization reactions have higher bond thermal stability and better heat resistance than urethane and urea bonds, but when even more multifunctional isocyanate compounds are used, the network structure with further isocyanurate rings is formed, resulting in better heat resistance and less susceptibility to the effects of humidity at high temperatures.

The thermally dissociable blocking agent is preferably at least one compound selected from the group consisting of oxime compounds, pyrazole compounds, and active ethylene compounds, in terms of ink preservation and thermal dissociation.

Oxime compounds include formamide oxime, acetaldoxime, acetoxime, methyl ethyl ketone oxime, and cyclohexanone oxime.

Pyrazole compounds include pyrazole, 3-methylpyrazole, and 3,5-dimethylpyrazole.

Active ethylene compounds include dimethyl malonate, diethyl malonate, methyl acetoacetate, ethyl acetoacetate, and acetylacetone.

Multifunctional isocyanate compounds having an isocyanate group protected by the above-mentioned blocking agents include, for example, 2-[(3,5-dimethylpyrazolyl)carbonylamino]ethyl methacrylate, 2-[(3 (3,5-dimethylpyrazolyl)carbonylamino]ethyl methacrylate, 2-[(3,5-dimethylpyrazolyl)carbonylamino]ethyl acrylate, 2-[(3 (3,5-dimethylpyrazolyl)carbonylamino]ethyl acrylate, and 2-[(3,5-dimethylpyrazolyl)aminooxycarbonylamino]ethyl acrylate.

### (Epoxy group)

Compounds with an epoxy group include, for example, various chain-type epoxy group-containing monomers (e.g., glycidyl (meth)acrylate, β-methyl glycidyl (meth)acrylate, glycidyl vinyl ether, and allyl glycidyl ether), various vinyl monomers containing (2-oxo-1,3-dioxolane) group (e.g., (2-oxo-1,3-oxolane)methyl (meth)acrylate), various vinyl monomers containing an alicyclic epoxy group (e.g., 3,4-epoxycyclohexyl (meth)acrylate, 3,4-epoxycyclohexylmethyl (meth)acrylate, 3,4-epoxycyclohexylethyl (meth)acrylate, etc.), bisphenol A diglycidyl ether, bisphenol F diglycidyl ether , bisphenol S diglycidyl ether, brominated bisphenol A diglycidyl ether, brominated bisphenol F diglycidyl ether, brominated bisphenol S diglycidyl ether, hydrogenated bisphenol A diglycidyl ether, hydrogenated bisphenol F diglycidyl ether, hydrogenated bisphenol S diglycidyl ether, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers); polyglycidyl ethers of polyether polyols obtained by adding one or more alkylene oxides to aliphatic polyhydric alcohols such as ethylene glycol, propylene glycol and glycerin; diglycidyl esters of aliphatic long-chain dibasic acids; monoglycidyl ethers of aliphatic higher alcohols; monoglycidyl ethers of phenol, cresol, butylphenol or polyether alcohols obtained by adding alkylene oxide thereto; and glycidyl esters of higher fatty acids.

Furthermore, compounds having an epoxy group include a compound having a (meth)acryloyl group and an epoxy group, and a partial (meth)acrylic compound of an epoxy compound.

Compounds having the above (meth)acryloyl and epoxy groups include glycidyl (meth)acrylate and 4-hydroxybutyl (meth)acrylate glycidyl ether.

Partial (meth)acrylates of the above epoxy compounds are obtained by reacting epoxy compounds with (meth)acrylic acid in the presence of a catalyst according to the usual method. Epoxy compounds that may be used for partial (meth)acrylates of the above epoxy compounds include novolac epoxy compounds and bisphenol epoxy compounds. The above novolac epoxy compounds include phenol novolac epoxy compounds, cresol novolac epoxy compounds, biphenyl novolac epoxy compounds, trisphenol novolac epoxy compounds, and dicyclopentadiene novolac epoxy compounds. The above bisphenol epoxy compounds include bisphenol A epoxy compounds, bisphenol F epoxy compounds, 2,2'-diarylbisphenol A epoxy compounds, hydrogenated bisphenol epoxy compounds, and Polyoxypropylene bisphenol A epoxy compounds. It is possible to obtain epoxy compounds with the desired acrylation ratio by changing the amount of epoxy compound and (meth)acrylic acid as needed.

### ((Meth)acrylic group)

The term "(meth)acrylic group" means an acrylic group or a methacrylic group. Examples of the compound having a (meth)acrylic group include: monofunctional acrylate such as isoamyl (meth)acrylate, stearyl (meth)acrylate, lauryl (meth)acrylate, octyl (meth)acrylate, decyl (meth)acrylate, isomylstil (meth)acrylate, isostearyl (meth)acrylate, 2-ethylhexyl-diglycol (meth)acrylate, 2-hydroxybutyl (meth)acrylate, 2-(meth)acryloyloxyethylhexahydrophthalate, butoxyethyl (meth)acrylate, ethoxydiethylene glycol (meth)acrylate, methoxydiethylene glycol (meth)acrylate, methoxypolyethylene Glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate) acrylate, 2-hydroxy-3-phenoxypropyl (meth)acrylate, 2-(meth)acryloyloxyethyl succinate, 2-(meth)acryloyloxyethyl phthalate, 2-(meth)acryloyloxyethyl-2-hydroxyethyl-phthalic acid and t-butylcyclohexyl (meth)acrylate; difunctional acrylate such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylates, 1,6-hexanediol di(meth)acrylate, 1,9-nonanediol di(meth)acrylate, neopentyl glycol di(meth)acrylate, dimethylol-tricyclodecane di(meth)acrylate, bisphenol PO adducts of A di(meth)acrylate, neopentylglycol hydroxypivalate di(meth)acrylate, polytetramethylene glycol di(meth)acrylate, polyethylene glycol diacrylate, tripropylene glycol diacrylate, and tricyclodecanedimethanol diacrylate; and polyfunctional acrylate containing tri- or more functional acrylate such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritol ethoxy tetra(meth)acrylate.

Among the aforementioned compounds having a (meth)acrylate group, (meth)acrylate compounds having an imide group are preferred because they improve high temperature and high humidity resistance.

In the case of (meth)acrylate compounds having an imide groups, strong metal adhesion is obtained due to the high polarity of the imide group. In addition, since they themselves have strong cohesive strength, there is little effect on metal adhesion even under high humidity.

Imido acrylate or imido methacrylate described in JP-A 10-36462 and JP-A 11-21470 are examples of (meth)acrylate compounds having an imide group.

### (Maleimide group)

Examples of the compound having a maleimide group include N-methylmaleimide, N-ethylmaleimide, N-hexylmaleimide, N-propylmaleimide, N Butylmaleimide, N-octylmaleimide, N-dodecylmaleimide, N-cyclohexylmaleimide, N-phenylmaleimide, N-p N-carboxyphenylmaleimide, N-p-hydroxyphenylmaleimide, N-p-chlorophenylmaleimide, N-p N-p-chlorophenylmaleimide, N-p-tolylmaleimide, N-p-xylylmaleimide, N-o-chlorophenylmaleimide, N-o-o N-benzylmaleimide, N-2,5-diethylphenylmaleimide, N-2,5-dimethylphenylmaleimide, N -N-m-tolylmaleimide, N-alpha-naphthylmaleimide, N-o N-xylylmaleimide, N-m-xylylmaleimide, N-m-xylylmaleimide, N-m-maleimidomethane, 1,2-bismaleimidoethane, 1,6-bismaleimidohexane, N-dodecane bismaleimide, N,N'-m N,N'-p-phenylenediamine, N,N'-phenylenediamine, 4,4'-bismaleimide diphenyl ether, 4,4'-bismaleimide diphenyl methane, 4,4 4,4'-bismaleimido-di(3-methylphenyl)methane, 4,4'-bismaleimido-di(3-ethylphenyl)methane, 4,4 4,4'-bismaleimide-di(3-methyl-5-ethyl-phenyl)methane, N,N'-(2,2-bis-(4-phenoxyphenyl)propane)dimaleimide, N,N'-2,4-tolylenedimaleimide, N,N'-2,6-tolylenedimaleimide, N, N'-m-xylylene dimaleimide, and bisphenol A diphenyl ether bismaleimide.

### (Mercapto group)

Examples of the compound having a mercapto group include ethyl thioacrylate, ethyl thiomethacrylate, biphenyl thioacrylate, biphenyl thiomethacrylate, nitrophenyl thioacrylate, nitrophenyl thiomethacrylate, triphenyl methyl thioacrylate, triphenylmethylthiomethylthiomethacrylate, 1,2-bis[(2-mercaptoethyl)thio]-3-mercaptopropane trisacrylate, 2-propenoic 2-(mercaptomethyl)-methyl ester of 2-propenoic acid, and 2-[(2-mercaptoethyl)thio]ethyl ester of methacrylic acid, 1,4-bis(3 1,4-bis(3-mercaptobutyryloxy)butane, and 1,3,5-tris(3-mercaptobutyryloxyethyl)-1,3,5-triazine-2,4,6(1H,3H,5H)-trione.

### (Alkoxy group)

Examples of the compound having an alkoxy group include methoxymethyl acrylate, methoxymethyl methacrylate, dimethoxymethyl acrylate and dimethoxymethyl methacrylate, 1-methoxyethyl acrylate, 1 methoxyethyl methacrylate, 2-methoxyethyl acrylate, 2-methoxyethyl methacrylate, 1,1-methoxyethyl acrylate and 1,1 methoxyethyl methacrylate, 1-ethoxyethyl acrylate, 1-ethoxyethyl methacrylate, 2-ethoxyethyl acrylate and 2-ethoxyethyl methacrylate, and N-ethoxymethylacrylamide, N-ethoxymethylmethacrylamide, ethoxymethylacrylate and ethoxymethylmethacrylate, and acrylic modified alkylated melamine.

### (Other functional group)

In addition to the aforementioned functional groups, examples of the compound having a thermosetting functional group include compounds having an oxetanyl group or an oxazoline group. Examples of the compound having an oxetanyl group include oxetane (meth)acrylate. Commercial products of such compounds include the trade names: OXE-10 and OXE-30 manufactured by Osaka Organic Chemical Co.

Examples of the compound having an oxazoline group include 2-isopropenyl-2-oxazoline, 2-isopropenyl-4-methyl-2-oxazoline, 2-isopropenyl-5-ethyl-2-oxazoline, 2 2-vinyl-2-oxazoline, 2-vinyl-4-methyl-2-oxazoline 2-vinyl-4-methyl-2-oxazoline, 2-vinyl-5-methyl-2-oxazoline, and monomers having substituents on the oxazoline group of these oxazoline-containing monomers.

### (2) Gelling agent

The gelling agent contained in the ink of the present invention is preferably held in a uniformly dispersed state in the cured film cured by light and heat, which prevents moisture from penetrating into the cured film.

It is preferred that the gelling agent is at least one of the compounds represented by the following Formulas (G1) or (G2), as they are dispersed in the cured film without interfering with the curability of the ink. Furthermore, in inkjet printing, it is preferred in that it has good pinning property, drawing with both fine lines and film thickness, and excellent fine line reproducibility.

Formula (G1): R₁-CO-R₂

Formula (G2): R₃-COO-R₄

In Formulas, R₁ to R₄ each independently represent an alkyl chain having a linear moiety of 12 or more carbon number, and the alkyl chain may have a branch.

The ketone wax represented by the above general Formula (G1) or the ester wax represented by the above Formula (G2) has a carbon number of 12 or more in the linear or branched hydrocarbon group (alkyl chain), which increases the crystallinity of the gelling agent and improves water resistance. In the card house structure below, more sufficient space in the card house structure is produced.

As a result, an ink medium such as a solvent and a photo-polymerizable compound may be sufficiently contained in the space, and the pinning property of the ink is further enhanced.

The carbon number of the linear or branched-chain hydrocarbon group (alkyl chain) is preferably 26 or less. If the carbon number is 26 or less, the melting point of the gelling agent is not excessively high and the ink does not need to be excessively heated when the ink is emitted.

From the above perspective, it is particularly preferred that R₁ and R₂, or R₃ and R₄ are linear hydrocarbon groups with a carbon atom number in the range of 12 to 23.

From the viewpoint of raising the gelation temperature of the ink and causing the ink to gel more rapidly after impact, it is preferable that either R₁ or R₂, or R₃ or R₄, is a hydrocarbon group having 12 to 23 carbon atoms that are saturated.

From the above perspective, it is more preferable that both R₁ and R₂ or both R₃ and R₄ are a saturated hydrocarbon group having 11 or more and less than 23 carbon atoms.

Examples of the ketone wax represented by the above Formula (G1) include dilignoseryl ketone (C24-C24), dibehenyl ketone (C22-C22), distearyl ketone (C18-C18), diacosyl ketone (C20-C20), dipalmityl ketone (C16-C16), dimyristyl ketone (C14-C14), dilauryl ketone (C12-C12), lauryl myristyl ketone (C12-C14), lauryl palmityl ketone (C12-C16), myristyl palmityl ketone (C14-C16), myristyl stearyl ketone (C14-C18), myristyl behenyl ketone (C14-C22), palmityl stearyl ketone (C16-C18), palmityl behenyl ketone (C16-C22), and stearyl behenyl ketone (C18-C22). The number of carbons in parentheses above represents the number of carbons in each of the two hydrocarbon groups separated by a carbonyl group.

Examples of commercially available ketone waxes represented by Formula (G1) include Stearonne (made by Alfa Aeser; Stearon), 18-Pentatriacontanon (made by Alfa Aeser), Hentriacontan-16-on (made by Alfa Aeser), and Kaowax T-1 (made by Kao Corporation).

Examples of the aliphatic acid or ester wax represented by Formula (G2) include behenyl behenate (C21-C22), icosyl icosanoate (C19-C20),stearyl stearate (C17-C18), palmityl stearate (C17-C16), lauryl stearate (C17-C12), cetyl palmitate (C15-C16), stearyl palmitate (C15-C18), myristyl myristate (C13-C14), cetyl myristate (C13-C16), octyldodecyl myristate (C13-C20), stearyl oleate (C17-C18), stearyl erucate (C21-C18), stearyl linoleate (C17-C18), behenyl oleate (C18-C22), arachidyl linoleate (C17-C20). The number of carbons in parentheses above represents the number of carbons in each of the two hydrocarbon groups separated by the ester group.

Examples of commercially available ester waxes represented by Formula (G2) include Unistar M-2222SL and Sperm Aceti, manufactured by Nichiyu ("Unistar" is a registered trademark of Nichiyu), Excepal SS and Excepal MY-M, manufactured by Kao Corporation ("Excepal" is a registered trademark of Kao), EMALEX CC-18 and EMALEX CC-10, manufactured by Nippon Emulsion ("EMALEX" is a registered trademark of Nippon Emulsion), and Amreps PC, made by Kokyu Alcohol Industry. ("Amreps" is a registered trademark of the company).

Since these commercial products are often mixtures of two or more types, they may be separated and purified as needed and included in the ink. Among these gelling agents, ketone waxes, ester waxes, higher fatty acids, higher alcohols, and fatty acid amides are preferred from the viewpoint of better pining properties.

The content of the gelling agent in the present invention is preferably in the range of 0.5 to 5.0 mass% of the total mass of the ink. By setting the content of the gelling agent within the above range, the solubility and pinning effect of the gelling agent in the solvent component will be improved, and furthermore, the water resistance when made into a cured film will be improved. From the above viewpoint, it is more preferable that the content of the gelling agent in the inkjet ink is in the range of 0.5 to 2.5 mass%.

From the following viewpoints, the gelling agent preferably crystallizes in the ink at a temperature below the gelling temperature of the ink. The gelation temperature is the temperature at which the gelling agent undergoes a phase transition from sol to gel and the viscosity of the ink suddenly changes when the ink that has been solified or liquefied by heating is cooled.

Specifically, the ink that has been solified or liquefied is cooled while its viscosity is measured with a viscoelasticity measuring device (e.g., MCR300, made by Physica Co.), and the temperature at which the viscosity increases rapidly may be defined as the gelling temperature of the ink.

### (3) Compound having a photo-polymerizable functional group

The compound having a photo-polymerizable functional group (also referred to as a photo-polymerizable compound) contained in the ink according to the present invention is a compound that polymerizes or crosslinks by causing a polymerization or crosslinking reaction upon irradiation with an actinic ray, and any compound having the effect of curing the ink may be used. Examples of the photo-polymerizable compound include radical polymerizable compounds and cationic polymerizable compounds.

The photo-polymerizable compound may be a monomer, a polymerizable oligomer, a prepolymer, or a mixture of these. Only one type of photo-polymerizable compound may be included in the inkjet ink, or two or more types may be included.

Radical polymerizable compounds are preferably unsaturated carboxylic acid ester compounds, and (meth)acrylate is more preferred. Such compounds include the aforementioned compounds having a (meth)acryl group.

Cationic polymerizable compounds may be epoxy compounds, vinylether compounds, and oxetane compounds. Only one type of cationic polymerizable compound may be included in the inkjet ink, or two or more types may be included.

### (4) Photoinitiator

The photoinitiator used in the ink for the present invention is preferably a photo-radical initiator when the photoinitiator is a radical polymerizable compound, and a photo-acid generator when the photoinitiator is a cationic polymerizable compound.

Only one type of photoinitiator may be included in the ink, or two or more types may be included. The photoinitiator may be a combination of both photo-radical initiators and photoacid generators. Photo-radical initiators include cleavage-type radical initiators and hydrogen-drawing radical initiators.

Examples of the cleavage-type radical initiator include acetophenone initiators, benzoin initiators, acylphosphine oxide initiators, benzyl and methylphenylglyoxyesters.

Examples of the acetophenone initiator include diethoxyacetophenone, 2-hydroxy-2-methyl-1-phenylpropan-1 -on, benzyl dimethyl ketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexyl-phenyl ketone, 2-methyl-2-morpholino(4-thiomethylphenyl)propan-1-one and 2-benzyl-2-dimethylamino-1-(4-molphorinophenyl)-butanone.

Examples of the benzoin-based initiator include benzoin, benzoin methyl ether and benzoin isopropyl ether. Examples of the acylphosphine oxide initiator include 2,4,6-trimethylbenzodiphenylphosphine oxide.

Examples of the hydrogen-drawing radical initiator include benzophenone initiators, thioxanthone initiators, aminobenzophenone initiators, 10-butyl-2-chloroacridone, 2-ethylanthraquinone, 9,10-phenanthrenequinone, and camphorquinone.

Examples of benzophenone imitators include benzophenone, o-benzoylbenzoic acid methyl-4-phenylbenzophenone, 4,4'-dichlorobenzophenone, 4,4'-dichlorobenzophenone hydroxybenzophenone, 4-benzoyl-4'-methyl-diphenyl sulfide, acrylated benzophenone, 3,3',4,4'-tetra(t 3,3',4,4'-tetra(t-butylperoxycarbonyl)benzophenone and 3,3'-dimethyl-4-methoxybenzophenone.

Examples of thioxanthone initiators include 2-isopropylthioxanthone, 2,4-dimethylthioxanthone, 2,4-diethylthioxanthone and 2,4-dichlorothioxanthone.

Examples of aminobenzophenone initiators include Michler ketones and 4,4'-diethylaminobenzophenone.

Examples of the photo-acid generator include compounds described in "Organic Materials for Imaging," edited by the Research Group on Organic Electronics Materials, Bunshin Shuppan (1993), pages 187-192.

The content of the photoinitiator may be within the range where the ink may cure sufficiently, for example, 0.01 to 10 mass% of the total mass of the ink.

Examples of commercially available photoinitiators include Irgacure TPO (made by BASF), 819 (made by BASF), Irgacure 379 (made by BASF), Genocure ITX (made by Rahn A.G.), and Genocure EPD (made by Rahn A.G.).

The inks for the present invention may further contain photoinitiator auxiliaries and polymerization inhibitors as needed.

The photoinitiator auxiliary may be a tertiary amine compound, preferably an aromatic tertiary amine compound.

Examples of aromatic tertiary amine compounds include N,N-dimethylaniline, N,N-diethylaniline, N,N-dimethyl-p-toluidine, N,N -dimethylamino-p-benzoic acid ethyl ester, N,N-dimethylamino-p-benzoic acid isoamylethyl ester, N,N -dihydroxyethylaniline, triethylamine, and N,N-dimethylhexylamine. Among these, N,N-dimethylamino-p-benzoic acid ethyl ester and N,N-dimethylamino-p-benzoic acid isoamylethyl ester are preferred. These compounds may be used alone, or two or more may be used in combination.

### (5) Colorants

The inks for the present invention may further contain a colorant as needed. The colorant may be a dye or a pigment, but pigments are preferred because they have good dispersibility with the components of the ink and excellent weather resistance. Pigments are not particularly limited, but include, for example, organic or inorganic pigments of the following numbers listed in the color index.

Examples of the red or magenta pigment include pigments selected from Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 10 8, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, and 36, and mixtures thereof.

Examples of blue or cyan pigments include pigments selected from Pigment Blue 1, 15, 15:1, 15:2, 15:3, 15:4, 15:6, 16, 17-1, 22, 27, 28, 29, 36, and 60, or mixtures thereof.

Examples of green pigments include pigments selected from Pigment Green 7, 26, 36, 50, or mixtures thereof.

Examples of yellow pigments include pigments selected from Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, 185 and 193, or mixtures thereof.

Examples of black pigments include pigments selected from Pigment Black 7, 28, and 26, or mixtures thereof.

Specific examples of commercially available products of the pigment include Black Pigment (manufactured by Mikuni-Color Ltd.) CHROMOFINE YELLOWs 2080, 5900, 5930, AF-1300, and AF-2700L; CHROMOFINE ORANGEs 3700L and 6730; CHROMOFINE SCARLET 6750; CHROMOFINE MAGENTAs 6880, 6886, 6891N, 6790, and 6887; CHROMOFINE VIOLET RE; CHROMOFINE REDs 6820 and 6830; CHROMOFINE BLUEs HS-3, 5187, 5108, 5197, 5085N, SR-5020, 5026, 5050, 4920, 4927, 4937, 4824, 4933GN-EP, 4940, 4973, 5205, 5208, 5214, 5221, and 5000P; CHROMOFINE GREENs 2GN, 2GO, 2G-550D, 5310, 5370, and 6830; CHROMOFINE BLACK A-1103; SEIKAFAST YELLOWs 10GH, A-3, 2035, 2054, 2200, 2270, 2300, 2400(B), 2500, 2600, ZAY-260, 2700(B), and 2770; SEIKAFAST REDs 8040, C405(F), CA120, LR-116, 1531B, 8060R, 1547, ZAW-262, 1537B, GY, 4R-4016, 3820, 3891, and ZA-215; SEIKAFAST CARMINEs 6B1476T-7, 1483LT, 3840, and 3870; SEIKAFAST BORDEAUX 10B-430; SEIKALIGHT ROSE R40; SEIKALIGHT VIOLETs B800 and 7805; SEIKAFAST MAROON 460N; SEIKAFAST ORANGEs 900 and 2900; SEIKALIGHT BLUEs C718 and A612; CYANINE BLUEs 4933M, 4933GN-EP, 4940, and 4973 (manufactured by Dainichiseika Color & Chemicals Mfg. Co., Ltd. "CHROMOFINE" is a registered trademark of the company.); KET Yellows 401, 402, 403, 404, 405, 406, 416, and 424; KET Orange 501; KET Reds 301, 302, 303, 304, 305, 306, 307, 308, 309, 310, 336, 337, 338, and 346; KET Blues 101, 102, 103, 104, 105, 106, 111, 118, and 124; KET Green 201 (manufactured by DIC Corporation), Colortex Yellows 301, 314, 315, 316, P-624, 314, U10GN, U3GN, UNN, UA-414, and U263; Finecol Yellows T-13 and T-05; Pigment Yellow 1705; Colortex Orange 202, Colortex Reds 101, 103, 115, 116, D3B, P-625, 102, H-1024, 105C, UFN, UCN, UBN, U3BN, URN, UGN, UG276, U456, U457, 105C, and USN; Colortex Maroon 601; Colortex Brown B610N; Colortex Violet 600; Pigment Red 122; Colortex Blues 516, 517, 518, 519, A818, P-908, and 510; Colortex Greens 402 and 403; Colortex Blacks 702 and U905 (manufactured by Sanyo Color Works. LTD. "Colortex" and "Finecol" are registered trademarks of the company.); Lionol Yellow 1405G; Lionol Blues FG7330, FG7350, FG7400G, FG7405G, ES, and ESP-S (manufactured by Toyo Ink SC Holdings Co., Ltd. "Lionol" is a registered trademark of the company.); Toner Magenta E02; Permanent Rubin F6B; Toner Yellow HG; Permanent Yellow GG-02; Hostaperm Blue B2G (manufactured by Hoechst Industry Ltd.); Novoperm P-HG; Hostaperm Pink E; Hostaperm Blue B2G (manufactured by Clariant International Ltd. "Novoperm" and "Hostaperm" are registered trademarks of the company.); and Carbon Blacks #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corporation).

The pigments may be dispersed, for example, with a ball mill, a sand mill, an Attritor, a roll mill, an agitator, a Henschel mixer, a colloid mill, an ultrasonic homogenizer, a pearl mill, a wet jet mill, or a paint shaker.

The pigment is preferably dispersed so that the volume average particle size of the pigment particles is preferably in the range of 0.08 to 0.5 µm and a maximum diameter of 0.3 to 10 µm, more preferably 0.3 to 3 µm. The dispersion of the pigment is adjusted by the selection of the pigment, the dispersant, and the dispersion medium, the dispersion conditions, and the filtration conditions.

The ink of the present invention may further contain a dispersant in order to enhance the dispersibility of the pigment. Examples of the dispersant include carboxylic acid esters having a hydroxy group, salts of long chain polyamino amide and high molecular weight acid ester, salts of high molecular weight polycarboxylic acid, salts of long chain polyamino amide and polar acid ester, high molecular weight unsaturated acid esters, polymer copolymers, modified polyurethanes, modified polyacrylates, polyether ester type anionic surfactants, naphthalene sulfonic acid formalin condensate salts, aromatic sulfonic acid formalin condensate salts, polyoxyethylene alkyl phosphate esters, polyoxyethylene nonyl phenyl ethers, and stearyl amine acetates. Examples of commercial dispersants include Solsperse series such as Solsperse 22000 (manufactured by Avenica Co., Ltd.), and the PB series by Ajinomoto Fine Techno Co.

The ink of the present invention may further contain a dispersing aid if necessary. The dispersing aid may be selected according to the pigment. The total amount of dispersant and dispersing aid is preferably in the range of 1 to 50 mass% based on the total amount of the pigment.

The ink of the present invention may further contain a dispersing medium for dispersing the pigments as needed. Solvent may be included in the ink as the dispersing medium, but in order to suppress solvent residue in the formed image, it is preferable to use a photo-polymerizable compound (especially a monomer with low viscosity) as the dispersing medium, as described above.

Dyes include oil-soluble dyes. The following various dyes are examples of oil-soluble dyes. Examples of the magenta dye include MS Magenta VP, MS Magenta HM-1450, MS Magenta HSo-147 (manufactured by Mitsui Chemicals Inc.), AIZEN SOT Red-1, AIZEN SOT Red -2, AIZEN SOT Red-3, AIZEN SOT Pink-1, SPIRON Red GEH SPECIAL (made by Hodogaya Chemical), RESOLIN Red FB 200%, MACROLEX Red Violet R, MACROLEX ROT5B (made by Bayer Japan), KAYASET Red B, KAYASET Red 130, KAYASET Red 802 (made by Nippon Kayaku), PHLOXIN, ROSE BENGAL, ACID Red (made by Daiwa Kasei), HSR-31, DIARESIN Red K (made by Mitsubishi Kasei), and Oil Red (made by BASF Japan).

Examples of the cyan dye include MS Cyan HM-1238, MS Cyan HSo-16, Cyan HSo-144, MS Cyan VPG (made by Mitsui Chemicals, Inc.), AIZEN SOT Blue-4 (made by Hodogaya Chemical), RESOLIN BR, Blue BGLN 200%, MACROLEX Blue RR, CERES Blue GN, SIRIUS SUPRATURQ. Blue Z-BGL, SIRIUS SUPRA TURQ. Blue FB-LL 330% (made by Bayer Japan), KAYASET Blue FR, KAYASET Blue N, KAYASET Blue 814, Turq. Blue GL-5 200, Light Blue BGL-5200 (made by Nippon Kayaku), DAIWA Blue 7000, Oleosol Fast Blue GL (made by Daiwa Kasei), DIARESIN Blue P (manufactured by Mitsubishi Kasei), SUDAN Blue 670, NEOPEN Blue 808, and ZAPON Blue 806 (manufactured by BASF Japan).

Examples of the yellow dye include MS Yellow HSm-41, Yellow KX-7, Yellow EX-27 made by Mitsui Chemicals), AIZEN SOT Yellow-1, AIZEN SOT YelloW-3, AIZEN SOT Yellow-6 (made by Hodogaya Chemical), MACROLEX Yellow 6G, MACROLEX FLUOR, Yellow 10GN (made by Bayer Japan), KAYASET Yellow SF-G, KAYASET Yellow G, KAYASET Yellow A-G, KAYASET Yellow AE-G (made by NIPPON KAYAKU), DAIWA Yellow 330HB (made by Daiwa Kasei), HSY-68 (made by Mitsubishi Kasei), SUDAN Yellow 146, and NEOPEN Yellow 075 (made by BASF Japan).

Examples of the black dye include MS Black VPC (made by Mitsui Chemicals), AIZEN SOT Black-1, AIZEN SOT Black-5 (made by Hodogaya Chemical), RESORIN Black GSN 200%, RESOLIN Black BS (made by Bayer Japan), KAYASET Black A-N (made by Nippon Kayaku), DAIWA Black MSC (made by Daiwa Kasei), HSB-202 (made by Mitsubishi Kasei), NEPTLTNE Black X60, and NEOPEN Black X58 (made by BASF Japan).

One or more kinds of colorant may be included in the ink according to the present invention to give a desired color to the ink. The content of the colorant is preferably in the range of 0.1 to 20 mass% of the total ink volume, and it is more preferred to be in the range of 0.4 to 10 mass% by.

### (5) Other ingredients

The ink of the present invention may further contain other components including polymerization inhibitors and surfactants to the extent that the effect of the present invention is obtained. Only one or two or more of these components may be included in the ink of the present invention.

### (Polymerization inhibitor)

Examples of the polymerization inhibitor include (alkyl)phenol, hydroquinone, catechol, resorcinol, p-methoxyphenol, t-butylcatechol, t-butylhydroquinone, pyrogallol, 1,1,1,1-picrylhydrazyl, phenothiazine, p-benzoquinone, nitrosobenzene, 2,5-di-t-butyl-p-benzoquinone, dithiobenzoyl disulfide, picric acid, cupellone, aluminum N-nitrosophenylhydroxyamine, tri-p-nitrophenylmethyl, N-(3-oxyanilino-1,3-dimethylbutylidene)aniline oxide, dibutyl cresol, cyclohexanone oxime cresol, guaiacol, o -isopropylphenol, butyraldoxime, methyl ethyl ketoxime, and cyclohexanone oxime.

Examples of the commercial product of the polymerization inhibitor include Irgastab UV10 (made by BASF) and Genorad 18 (made by Rahn A.G.).

The amount of polymerization inhibitor may be set arbitrarily within the range where the effect of the invention can be obtained. The amount of polymerization inhibitor may be, for example, 0.001 mass% or more and less than 1.0 mass% of the total mass of the ink.

### (Surfactant)

Examples of the surfactant include anionic surfactants such as dialkyl sulfosuccinates, alkylnaphthalene sulfonates, and fatty acid salts, nonionic surfactants such as polyoxyethylene alkyl ethers, polyoxyethylene alkyl allyl ethers, acetylene glycols, and polyoxyethylene/polyoxypropylene block copolymers, cationic surfactants such as alkylamine salts, and quaternary ammonium salts, and silicone-based or fluorine-based surfactants.

Examples of the silicone surfactant include polyether modified polysiloxane compounds, specifically Tego rad 2250, made by Evonik; KF-351A, KF-352A, KF-642 and X-22-4272, made by Shin-Etsu Chemical; BYK307, BYK345, BYK347 and BYK348, made by Big Chemie ("BYK" is their registered trademark), and TSF4452, made by Momentive Performance Materials, Inc.

Fluorinated surfactant means a surfactant with fluorine substituted in whole or in part for the hydrogen bonded to the carbon of the hydrophobic group of an ordinary surfactant. Examples of the fluorinated surfactant include Megafac F, made by DIC ("Megafac" is their registered trademark), Surflon, made by AGC Seichemical ("Surflon" is their registered trademark), Fluorad FC, made by 3M ("Fluorad" is their registered trademark), Monflor, made by Imperial Chemical Industries, Zonyls, made by E.I. du Pont Nemerus and Company, Licowet VPF, made by Lubeberke-Hoechst, and FTERGENT, made by Neos ("FTERGENT" is their registered trademark).

The amount of surfactant may be set arbitrarily within the range where the effect of the invention may be obtained. The amount of surfactant may be, for example, 0.001 mass% or more and less than 1.0 mass% of the total mass of the ink.

### (Curing accelerator)

The ink of the present invention may contain a curing accelerator if necessary. As a curing accelerator, any agent that promotes thermal curing of the resin component may be used without restriction. Curing accelerators include, for example, imidazoles, dicyandiamide derivatives, dicarboxylic acid dihydrazides, triphenylphosphine, tetraphenylphosphonium tetraphenylborate, 2-ethyl-4-methylimidazole-tetraphenylborate, and 1,8-diazabicyclo[5.4.0]undecen-7-tetraphenylborate.

### (Coupling agent)

The ink according to the present invention may contain various coupling agents as needed. The inclusion of coupling agents may improve adhesion to copper foil. Various coupling agents include, for example, silane-based, titanium-based, and aluminum-based coupling agents.

### (Ion scavenger)

The ink according to the present invention may contain an ion scavenger if necessary. The inclusion of an ion scavenger has advantages such as the adsorption of ionic impurities and improved insulating properties under conditions where the cured film has absorbed moisture. Ion scavengers include, for example, inorganic ion adsorbents such as triazine thiol compounds, bisphenol reductants, zirconium compounds, and antimony-bismuth magnesium aluminum compounds.

### (Solvents)

In the inks according to the present invention, no solvent is originally preferred in terms of curing properties, but it may be added to adjust ink viscosity.

### <Physical properties of ink>

As an ink for according to the present invention, any ink in which the viscosity of the ink becomes 3 to 20 mPa·s, more preferably 5 to 15 mPa·s, when heated in the range of 30 to 100 °C may be used as appropriate for an inkjet ink. It is more preferable to use an ink that contains a gelling agent and that has an ink viscosity in the range of 1 to 1 x 10⁴ Pa·s at 25 °C. The use of such ink is preferable in that it sufficiently gels the ink when it lands on the surface and decreases to room temperature, resulting in good pinning properties.

The ink according to the present invention preferably has a phase transition point in the range of 40 °C or more to less than 100 °C. When the phase transition point is 40 °C or more, the ink gels quickly after landing on the recording medium, resulting in higher pinning properties. If the phase transition point is less than 100 °C, ink handling is better and ejection stability is higher. From the viewpoint of enabling ink dispensing at lower temperatures and reducing the load on the image forming equipment, it is more preferable that the phase transition point of the ink is in the range of 40 to 60 °C.

The viscosity and phase transition point of the ink may be determined by measuring the temperature variation of the dynamic viscoelasticity of the ink with a rheometer. In the present invention, these viscosity and phase transition points are values obtained by the following method. It is preferable to adjust the measurement temperature appropriately according to the ink. The ink is heated to 100 °C and the viscosity is measured by a stress-controlled rheometer Physica MCR301 (cone plate diameter: 75 mm, cone angle: 1.0 degree), made by Anton Paar, while shearing rate 11.7 (1/s) and temperature decrease rate 0.1 °C/s to 20 °C. The ink is cooled to obtain a temperature change curve of viscosity.

For example, the viscosity at 80 °C as the discharge temperature and the viscosity at 25 °C as the temperature at the time of impact on the substrate may be obtained by reading the viscosity at 80 °C and 25 °C on the viscosity temperature change curve, respectively. The phase transition point may be determined as the temperature at which the viscosity reaches 200 mPa·s in the temperature change curve of viscosity.

From the viewpoint of better discharging ability from the inkjet head, the average dispersed particle size of the pigment particles of the present invention is preferably in the range of 50 to 150 nm, and the maximum particle size is preferably in the range of 300 to 1,000 nm. Even more preferred is an average dispersed particle diameter in the range of 80 to 130 nm.

The average dispersed particle diameter of pigment particles in the present invention means the value obtained by dynamic light scattering using the Datasizer Nano ZSP, made by Malvern, Inc. Note that the ink containing colorants has a high concentration and light does not penetrate this measuring instrument, so the ink is diluted 200 times before measurement. The measurement temperature is room temperature (25 °C).

### <Method of forming solder resist film>

The ink according to the present invention is preferably an ink for forming solder resist patterns used on printed circuit boards. When a solder resist pattern (solder resist film) is formed using the ink according to the present invention, moisture penetration into the solder resist film may be prevented, resulting in good adhesion between the copper foil and solder resist film interface in the printed circuit board, and copper migration is prevented. As a result, the adhesion between the copper foil and the solder resist film interface on the printed circuit board is good, copper migration is prevented, and degradation of insulation properties can be suppressed.

The method of forming a solder resist film using the ink according to the present invention preferably includes the process of (1) ejecting the ink of the present invention from the nozzle of an inkjet head and depositing it on a circuit-formed printed circuit board, and the process of (3) heating the ink to fully cure the ink. When the ink according to the present invention contains a compound having a photo-polymerizable functional group and a photoinitiator, it is preferable to include, between the processes (1) and (3) above, a process (process (2)) in which the ink is temporarily cured by irradiating active light rays on the ink that has been deposited.

### Process (1)

In the process (1), droplets of the ink of the present invention are ejected from an inkjet head and landed on a printed circuit board, which is a recording medium, at a position corresponding to the resist film to be formed, and patterned.

The ejection method from the inkjet head may be either on-demand or continuous. On-demand inkjet heads may be single-cavity, double-cavity, bender, piston, shear mode, shared wall, and other electromechanical conversion types, as well as thermal inkjet and Bubble Jet (registered trademark) (Bubble Jet is a registered trademark of Canon Inc.).

Ink droplets may be dispensed from the inkjet head in a heated state to enhance dispensing stability. The temperature of the ink when being dispensed is preferably in the range of 40 to 100 °C. To further enhance dispensing stability, it is more preferable that the temperature is in the range of 40 to 90 °C. In particular, it is preferable to perform ejection at an ink temperature such that the viscosity of the ink is in the range of 7 to 15 mPa·s, more preferably 8 to 13 mPa·s.

For sol-gel phase-transition type inks, it is preferable that the temperature of the ink when filled into the inkjet head is set between (gelation temperature + 10) °C and (gelation temperature + 30) °C in order to improve ink discharge from the inkjet head. If the temperature of the ink in the inkjet head is less than (gelatinization temperature + 10) °C, the ink tends to gelatinize in the inkjet head or on the nozzle surface, resulting in poor ink discharging ability. On the other hand, if the temperature of the ink in the inkjet head exceeds (gelation temperature + 30) °C, the ink becomes too hot and the ink components may deteriorate.

The method of heating the ink is not restricted. For example, at least one of an ink tank constituting the head carriage, an ink supply system such as a supply pipe and an ink tank in the front chamber immediately before the head, a pipe with a filter, or a piezo head may heated by a panel heater, a ribbon heater, or thermal water. The amount of ink droplets when ejected is preferably in the range of 2 to 20 pL in terms of recording speed and image quality.

Printed circuit boards are not limited. Examples thereof include copper-clad laminates of all grades (e.g., FR-4) using materials such as copper-clad laminates for high-frequency circuits employing paper phenol, paper epoxy, glass cloth epoxy, glass polyimide, glass cloth/non-woven cloth epoxy, glass cloth/paper epoxy, synthetic fiber epoxy, fluorine-polyethylene-PPO-cyanate ester. In addition, polyimide films, PET films, glass substrates, ceramic substrates, wafer plates, and stainless steel plates are preferred.

### Process (2)

In the process (2), the ink deposited in the process (1) is irradiated with active light to temporarily cure the ink. The active rays may be selected from, for example, electron beams, ultraviolet rays, alpha rays, gamma rays, and X-rays, and ultraviolet rays are preferred.

UV irradiation may be performed under conditions of 395 nm wavelength using, for example, a water-cooled LED manufactured by Phoseon Technology, Inc. Using an LED as the light source may suppress ink curing defects caused by ink melting due to radiation heat from the light source.

The UV irradiation is performed so that the peak irradiance on the resist film surface of UV light having a wavelength in the range of 370 to 410 nm is preferably in the range of 0.5 to 10 W/cm² and more preferably in the range of 1 to- 5 W/cm². From the viewpoint of suppressing the irradiation of radiant heat to the ink, the light intensity irradiated to the resist film is preferably less than 500 mJ/cm².

The irradiation of active light is preferably performed between 0.001 and 300 seconds after the ink is deposited, and between 0.001 and 60 seconds is more preferable to form a high-definition resist film.

### Process (3)

In the process (3), the ink is further heated for fully curing after the temporary curing in the process (2). The heating method is preferably, for example, 10 to 60 minutes in an oven set at a temperature in the range of 110 to 180 °C.

In addition to use as ink for solder resist patterning as described above, the ink may also be used as an adhesive, sealant, or circuit protectant for electronic components.

### Examples

Hereinafter, examples are provided to illustrate the present invention in detail, but the present invention is not limited to these examples but defined by the appended claims. In the following examples, unless otherwise noted, operations were performed at room temperature (25 °C). Unless otherwise noted, "%" and "part" mean "mass%" and "mass part by mass" respectively.

### <Preparation of Yellow pigment dispersion>

Dispersant 1 and dispersant 2 below and the dispersion medium were placed in a stainless steel beaker, heated on a hot plate at 65 °C for 1 hour with heating and stirring to dissolve, cooled to room temperature, and then the pigments below were added to the beaker, along with 200 g of 0.5 mm diameter zirconia beads, placed in a glass bottle and tightly closed. This was dispersed in a paint shaker until the desired particle size was achieved, and then the zirconia beads were removed.
Dispersant 1: EFKA 7701 (made by BASF): 5.6 parts by mass
Dispersant 2: Solsperse 22000 (made by Lubrizol Japan): 0.4 parts by mass
Dispersion medium: Dipropylene glycol diacrylate (containing 0.2% UV-10): 80.6 parts by mass
Pigment: PY185 (made by BASF, Paliotol Yellow D1155): 13.4 parts by mass

### <Preparation of cyan pigment dispersion>

The cyan pigment dispersion was prepared in the same manner as preparation of the yellow pigment dispersion described above, except that the dispersant, dispersion medium and pigment were changed as shown below.
Dispersant: EFKA 7701 (made by BASF): 7 parts by mass
Dispersant: Dipropylene glycol diacrylate (containing 0.2% UV-10): 70 parts by mass
Pigment: PB15:4 (made by Dainichiseika, Chromo-fine blue 6332JC): 23 parts by mass

### <Gelling agent>

The following were used as gelling agents.
Distearyl ketone
Behenyl behenate

### <Compounds having a thermosetting functional group>

Compounds indicating in the following Table I were used.

**Table I**

| Compound No. having a thermosetting functional group | Thermosetting functional group | Product name | Company name | Blocking agent | Name |
|---|---|---|---|---|---|
| a1 | Hydroxy group | Epoxy ester M600A | Kyoei Kagaku Co., Ltd. | - | 2-hydroxy-3-phenoxypropyl acrylate |
| a2 | Multifunctional block isocyanate | Trixene B17961 | LANXESS | DMP (Pyrazole) | - |

### <Compounds having a photo-polymerizable functional group>

The following compounds were used as compounds having a photo-polymerizable functional group.
DPGTA (product name: M222 (made by Miwon))
TMP(EO)9TA (product name: EM2382 (made by Choko Chemical))

### <Photoinitiator>

The following compound was used as a photoinitiator.
TPO (made by BASF)

### <Photosensitization aid>

The following compound was used as a photosensitization aid.
ITX (made by Lambson)

### <Preparation of Inkjet inks 1 and 2>

The inks were prepared according to the ink compositions listed in Table II below and filtered through an ADVATEC Teflon (registered trademark) 3 µm membrane filter. Ink 1 contains non-block isocyanate and ink 2 contains pyrazole block isocyanate.

**Table II**

| Ink No. | Yellow pigment dispersion | Cyan pigment dispersion | Gelling agent | | Compound No. having a thermosetting unctional group | |
|---|---|---|---|---|---|---|
| | | | Distearyl ketone | Behenyl behenate | a1 | a2 |
| 1 | 3.0 | 1.0 | 1.1 | 1.2 | 50.0 | 0.0 |
| 2 | 3.0 | 1.0 | 1.1 | 1.2 | 0.0 | 50.0 |

**Table II Continued**

| Ink No. | Compound having a photo-polymerizable functional group | | Photo-polymerization initiator | Photosensitization aid |
|---|---|---|---|---|
| | Photosensitization aid | TMP(EO)9TA | | |
| 1 | 27.7 | 10.0 | 3.0 | 3.0 |
| 2 | 27.7 | 10.0 | 3.0 | 3.0 |

### <Pattern formation by inkjet>

Each inkjet ink prepared was loaded into an inkjet recording device having an inkjet recording head equipped with a piezoelectric inkjet nozzle. The device was used to form patterns on a copper-clad laminate for printed wiring boards (FR-4, 1.6 mm thick, 150 mm x 95 mm in size).

The ink supply system consisted of a main tank, a first sub-tank, a degassing device, a second sub-tank, an ink flow path, piping with metal filters, and a piezo head, as shown in FIG. 3.

The ink supply from the main tank to the first sub-tank was provided by a valve (solenoid valve) 55, supply pump 53 and float sensor 241a, as shown in the flowchart described in FIG. 8 above.

The capacity of the second sub-tank is 100 mL, and the shape of the second sub-tank was made to have a configuration of a rubber heater 272 on the outer surface of the side walls and on the bottom of the second sub-tank 245, as shown in FIG. 4.

Furthermore, the capacity of the first sub-tank was 200 mL, and the shape of the first sub-tank was made as follows, as shown in Table III below.

Sub-tank A: The first sub-tank is not provided with a partition plate, and is configured with rubber heaters on the outer surface of the sidewalls and on the bottom of the first sub-tank. The surface area of the inner wall of the tank heated by the rubber heater is the same as that of the second sub-tank.

Sub-tank B: The same configuration as the first sub-tank shown in FIG. 5A and FIG. 5B. In other words, a rubber heater is installed on the outer surface of the sidewalls and on the bottom of the first sub-tank and a partition plate is installed in the first sub-tank, and the surface area of the tank inner walls (sidewall 2411, bottom 2412 and partition plate 2415) heated by the rubber heater in contact with the ink is larger than the surface area of the second sub-tank in contact with ink of the tank inner walls heated by the rubber heater. The shape of the tank is such that the surface area in contact with the ink of the tank inner walls heated by the rubber heater is larger than the surface area in contact with the ink of the tank inner walls heated by the heater in the second sub-tank.

The ratio of the amount of the ink newly supplied from the main tank to the first sub-tank (supply volume) to the amount of ink remaining in the first sub-tank (residual volume) was set to be as shown in Table III below. In addition, the ink was heated to 85 °C from the first sub-tank to the head section, and a heater was also built into the piezo head to heat the ink temperature in the recording head to 80 °C. The piezo head was a Konica Minolta KM1024iSHE-C with a nozzle resolution of 360 dpi, and the heads were staggered so that the nozzle resolution was 360 dpi and the print width was 140 mm.

Using such an inkjet recording device, voltage was applied so that the droplet volume would be 6.0 pl, and a solid pattern of 20mm x 50mm and a comb pattern of 100µm line & space with a thickness of 20µm each were printed on the substrate with a print resolution of 1440 dpi x 1440 dpi. The ink layer was temporarily cured by irradiating a Phoseon Technology LED lamp (395 nm, 8 W/cm², water cooled unit) to 500 mJ/cm². The ink layer was then placed in an oven set at 150 °C for 60 minutes for final curing, and printed samples were obtained.

### [Evaluation]

### <Substrate adhesion>

For the aforementioned solid pattern print samples, incisions were made in the cured film in a grid pattern according to the cross-cut method of JIS K5600, adhesive tape was applied, and by pulling off the tape, the peeling state of the cured film was observed, and the adhesion residue rate was determined by the following method and evaluated according to the following criteria. Here, the adhesion residual rate is calculated using the number of squares made by making incisions as the denominator and the number of squares remaining on the tape peeling as the numerator. "Double circle", "Circle", and "Triangle" were considered acceptable.

### (Criteria)

| | |
|---|---|
| "Double circle" : | Residual adhesion rate 100%. |
| "Circle": | Residual adhesion rate of 80% or more and less than 100%. |
| "Triangle": | Residual adhesion rate of 60% or more and less than 80. |
| "Cross mark": | Residual adhesion rate of less than 60%. |

### <Heat resistance of solder>

After immersing the printed sample with a solid pattern in a 260 °C solder bath three times for 10 seconds, the substrate adhesion was evaluated as described above, and the peeling state of the cured film was observed. "Double circle", "Circle", and "Triangle" were considered acceptable.

### <Ejection stability>

The inkjet recording device described above was operated for five consecutive days, printing on 100 printed circuit boards at an 8-hour operation per day. Head maintenance was performed at the startup and shutdown of each operating day, and 10 cc of ink was discharged per head. After 8 hours of operation on the fifth day, a nozzle check pattern was printed, and the frequency of non-discharge nozzles in the total number of nozzles was evaluated using the following criteria. "Circle" and "Double circle" were considered acceptable for ejection stability.

### (Criteria)

| | |
|---|---|
| "Double circle": | No non-dischargeable nozzles at all |
| "Circle": | A few non-dischargeable nozzles were observed, but this was resolved through maintenance. |
| "Triangle": | A few non-dischargeable nozzles were observed, which are not resolved by maintenance. |
| "Cross mark": | More than several dozen non-dischargeable nozzles were observed, and maintenance did not resolve the problem. |

**Table III**

| | Ink No. | Supply volume : Residual volume | Shape of First sub-tank | Substrate adhesion | Heat resistance of solder | Ejection stability |
|---|---|---|---|---|---|---|
| Comparative Example 1 | 1 | 20:80 | Sub-tank A | × | × | × |
| Comparative Example 2 | 1 | 50:50 | Sub-tank A | △ | × | △ |
| Example 1 | 1 | 60:40 | Sub-tank A | △ | ○ | ○ |
| Example 2 | 1 | 70:30 | Sub-tank A | ○ | △ | ○ |
| Comparative Example 3 | 2 | 50:50 | Sub-tank A | △ | × | △ |
| Example 3 | 2 | 70:30 | Sub-tank A | ○ | ○ | ○ |
| Comparative Example 4 | 2 | 20:80 | Sub-tank A | × | × | × |
| Example 4 | 2 | 70:30 | Sub-tank B | ⊚ | ○ | ○ |
| Example 5 | 2 | 90:10 | Sub-tank B | ⊚ | ○ | ⊚ |

As shown in the above results, in the example where the amount of ink newly supplied from the main tank to the first sub-tank is set to be larger than the amount of ink remaining in the first sub-tank, it is recognized that this example is superior to the comparative example in terms of substrate adhesion, solder heat resistance and ejection stability.

The reason why the results of the first sub-tank with the shape of sub-tank B were better than those with the shape of sub-tank A is assumed to be that the larger wetted surface area between the ink and the rubber heater shortens the heating time until the ink inside the first sub-tank reaches a predetermined temperature, thereby leading to improved ejection stability and substrate adhesion (coating strength). This is assumed to have led to improved ejection stability and substrate adhesion (coating film strength).

Furthermore, the ink 2 containing block isocyanate shows superior soldering heat resistance compared to the ink 1 containing non-block isocyanate.

### Industrial Applicability

The present invention may be used for an inkjet recording method and an inkjet recording device.

### Reference Signs List

- 1:: Inkjet recording device
- 24a:: Inkjet head
- 40:: Control unit
- 51:: Main tank
- 53:: Supply pump
- 55:: Valve
- 241:: First sub-tank
- 241a:: Float sensor
- 2411:: Side wall
- 2412:: Bottom
- 2413:: Inlet
- 2414:: Outlet
- 242:: Degassing module
- 245:: Second sub-tank
- 270:: Heating unit
- 272:: Rubber heater

## Claims

1. An inkjet recording method for recording an image by ejecting an ink from an inkjet head (24a), the method uses:
a main tank (51) as an ink supply source;
a first sub-tank (241) connected to the main tank and supplied with the ink;
a degassing device (242) connected to the first sub-tank to degas the ink supplied from the first sub-tank;
a second sub-tank (245) that supplies the ink degassed by the degassing device to the inkjet head and controls a negative pressure applied to the inkjet head;
a heating device (270) for heating at least a flow path of the ink in the first sub-tank; and
a control unit (40) for feeding the ink so that an amount of the ink newly supplied from the main tank to the first sub-tank is greater than an amount of the ink remaining in the first sub-tank,
wherein the ink is a radical polymerizable ink containing a thermosetting component.

2. The inkjet recording method according to claim 1, wherein the control unit intermittently pumps the ink from the main tank to the first sub-tank.

3. The inkjet recording method according to claim 1 or 2, wherein a block isocyanate is contained as the thermosetting component.

4. The inkjet recording method according to any one of claims 1 to 3, further comprising a heating device to heat a flow path of the ink in the second sub-tank, wherein in the first and second sub-tanks, an inner wall of the tank heated by the heating device has a larger surface area in contact with the ink in the first sub-tank than in the second sub-tank.

5. The inkjet recording method according to any one of claims 1 to 4, wherein a capacity of the first sub-tank is larger than a capacity of the second sub-tank.

6. An inkjet recording device that records an image by ejecting ink from an inkjet head (24a) , comprising:
a main tank (51) as an ink supply source;
a first sub-tank (241) connected to the main tank and supplied with ink;
a degassing device (242) connected to the first sub-tank to degas the ink supplied from the first sub-tank;
a second sub-tank (245) that supplies the ink degassed by the degassing device to the inkjet head and controls a negative pressure applied to the inkjet head;
a heating device (270) for heating at least a flow path of the ink in the first sub-tank; and
a control unit (40) for feeding the ink so that an amount of the ink newly supplied from the main tank to the first sub-tank is greater than an amount of the ink remaining in the first sub-tank.

7. The inkjet recording device according to claim 6, wherein the control unit intermittently pumps the ink from the main tank to the first sub-tank.

## Patentansprüche

1. Ein Tintenstrahlaufzeichnungsverfahren zum Aufzeichnen eines Bildes durch Ausstoßen einer Tinte aus einem Tintenstrahlkopf (24a), wobei das Verfahren verwendet wird:
einen Haupttank (51) als Tintenvorratsquelle;
einen ersten Untertank (241), der mit dem Haupttank verbunden ist und mit Tinte versorgt wird;
eine Entgasungsvorrichtung (242), die mit dem ersten Untertank verbunden ist, um die aus dem ersten Untertank zugeführte Tinte zu entgasen;
einen zweiten Untertank (245), der die von der Entgasungsvorrichtung entgaste Tinte dem Tintenstrahlkopf zuführt und einen auf den Tintenstrahlkopf ausgeübten Unterdruck steuert;
eine Heizvorrichtung (270) zum Erwärmen mindestens eines Strömungsweges der Tinte in dem ersten Untertank; und
eine Steuereinheit (40) zum Zuführen der Tinte, so dass eine Menge der aus dem Haupttank neu in den ersten Untertank zugeführten Tinte größer ist als eine Menge der im ersten Untertank verbleibenden Tinte,
wobei die Tinte eine radikalisch polymerisierbare Tinte ist, die eine wärmehärtende Komponente enthält.

2. Tintenstrahlaufzeichnungsverfahren nach Anspruch 1, wobei die Steuereinheit die Tinte intermittierend aus dem Haupttank in den ersten Untertank pumpt.

3. Tintenstrahlaufzeichnungsverfahren nach Anspruch 1 oder 2, wobei als wärmehärtende Komponente ein Blockisocyanat enthalten ist.

4. Tintenstrahlaufzeichnungsverfahren nach einem der Ansprüche 1 bis 3, ferner umfassend eine Heizvorrichtung zum Erwärmen eines Strömungswegs der Tinte im zweiten Untertank, wobei im ersten und zweiten Untertank eine Innenwand des durch die Heizvorrichtung erwärmten Tanks eine größere Oberfläche in Kontakt mit der Tinte im ersten Untertank als im zweiten Untertank aufweist.

5. Tintenstrahlaufzeichnungsverfahren nach einem der Ansprüche 1 bis 4, wobei die Kapazität des ersten Untertanks größer ist als die Kapazität des zweiten Untertanks.

6. Eine Tintenstrahlaufzeichnungsvorrichtung, die ein Bild durch Ausstoßen von Tinte aus einem Tintenstrahlkopf (24a) aufzeichnet, mit:
einen Haupttank (51) als Tintenvorratsquelle;
einen ersten Untertank (241), der mit dem Haupttank verbunden ist und mit Tinte versorgt wird;
eine Entgasungsvorrichtung (242), die mit dem ersten Untertank verbunden ist, um die aus dem ersten Untertank zugeführte Tinte zu entgasen;
einen zweiten Untertank (245), der die von der Entgasungsvorrichtung entgaste Tinte dem Tintenstrahlkopf zuführt und einen auf den Tintenstrahlkopf ausgeübten Unterdruck steuert;
eine Heizvorrichtung (270) zum Erwärmen mindestens eines Strömungsweges der Tinte in dem ersten Untertank; und
eine Steuereinheit (40) zum Zuführen der Tinte, so dass eine Menge der aus dem Haupttank neu in den ersten Untertank zugeführten Tinte größer ist als eine Menge der im ersten Untertank verbleibenden Tinte.

7. Tintenstrahlaufzeichnungsgerät nach Anspruch 6, wobei die Steuereinheit die Tinte intermittierend aus dem Haupttank in den ersten Untertank pumpt.

## Revendications

1. Méthode d'enregistrement à jet d'encre pour enregistrer une image en éjectant une encre d'une tête à jet d'encre (24a), la méthode utilise :
un réservoir principal (51) comme une source d'alimentation en encre ;
un premier réservoir secondaire (241) connecté au réservoir principal et fourni avec l'encre ;
un dispositif de dégazage (242) connecté au premier réservoir secondaire pour dégazer l'encre fournie par le premier réservoir secondaire ;
un deuxième réservoir secondaire (245) qui fournit l'encre dégazée par le dispositif de dégazage à la tête à jet d'encre et contrôle une pression négative appliquée à la tête à jet d'encre ;
un dispositif de chauffage (270) pour chauffer au moins une voie d'écoulement de l'encre dans le premier réservoir secondaire ; et
une unité de contrôle (40) pour alimenter l'encre de sorte qu'une quantité d'encre nouvellement fournie par le réservoir principal au premier réservoir secondaire est supérieure à une quantité d'encre restant dans le premier réservoir secondaire,
dans laquelle l'encre est une encre polymérisable radicale contenant un composant thermodurcissable.

2. La méthode d'enregistrement à jet d'encre selon la revendication 1, dans laquelle l'unité de contrôle pompe par intermittence l'encre du réservoir principal au premier réservoir secondaire.

3. La méthode d'enregistrement à jet d'encre selon la revendication 1 ou 2, dans laquelle un isocyanate en bloc est contenu comme le composant thermodurcissable.

4. La méthode d'enregistrement à jet d'encre selon l'une quelconque des revendications 1 à 3, comprenant en outre un dispositif de chauffage pour chauffer une voie d'écoulement de l'encre dans le deuxième réservoir secondaire, dans laquelle, dans les premier et deuxième réservoirs secondaires, une paroi intérieure du réservoir chauffée par le dispositif de chauffage a une plus grande surface en contact avec l'encre dans le premier réservoir secondaire que dans le deuxième réservoir secondaire.

5. La méthode d'enregistrement à jet d'encre selon l'une quelconque des revendications 1 à 4, dans laquelle une capacité du premier réservoir secondaire est supérieure à une capacité du deuxième réservoir secondaire.

6. Dispositif d'enregistrement à jet d'encre qui enregistre une image en éjectant de l'encre d'une tête à jet d'encre (24a), comprenant :
un réservoir principal (51) comme source d'alimentation en encre ;
un premier réservoir secondaire (241) connecté au réservoir principal et fourni avec de l'encre ;
un dispositif de dégazage (242) connecté au premier réservoir secondaire pour dégazer l'encre fournie par le premier réservoir secondaire ;
un deuxième réservoir secondaire (245) qui fournit l'encre dégazée par le dispositif de dégazage à la tête à jet d'encre et contrôle une pression négative appliquée à la tête à jet d'encre ;
un dispositif de chauffage (270) pour chauffer au moins une voie d'écoulement de l'encre dans le premier réservoir secondaire ; et
une unité de contrôle (40) pour alimenter l'encre de sorte qu'une quantité d'encre nouvellement fournie par le réservoir principal au premier réservoir secondaire est supérieure à une quantité d'encre restant dans le premier réservoir secondaire.

7. Le dispositif d'enregistrement à jet d'encre selon la revendication 6, dans lequel l'unité de contrôle pompe par intermittence l'encre du réservoir principal au premier réservoir secondaire.
